# EUROPEAN PATENT APPLICATION

(11) **EP 4 797 058 A1**
(43) Date of publication of application: **26.08.2026**
(21) Application number: 25829244.0
(22) Date of filing: 21.01.2025
(51) Int. Cl.: G06F 3/041

(54) **TOUCH-CONTROL METHOD AND RELATED DEVICE**

(30) Priority: 19.06.2024 CN 202410790277
(71) Applicant: Huawei Technologies Co., Ltd., Shenzhen, Guangdong 518129 (CN)
(72) Inventor: CHEN, Siqi, Shenzhen, Guangdong 518129 (CN); LUO, Hao, Shenzhen, Guangdong 518129 (CN); WU, Yang, Shenzhen, Guangdong 518129 (CN); LIU, Chong, Shenzhen, Guangdong 518129 (CN); WANG, Xiang, Shenzhen, Guangdong 518129 (CN)
(74) Representative: Maiwald GmbH
(86) International application number: PCT/CN2025/073706
(87) International publication number: WO 2025/260751

(57) **Abstract**

A touch control method and a related device are provided, to reduce a probability that a touch control failure occurs on a touch display screen, and improve touch control operation experience. For example, a display system includes a system on chip and a touch display screen. The touch display screen collects first capacitance data. The system on chip receives first information, where the first information includes the first capacitance data. The system on chip determines first position coordinates based on the first capacitance data, and makes a response. The touch display screen collects second capacitance data. The touch display screen obtains second position coordinates based on the second capacitance data when determining that the display system meets a first condition. The system on chip receives second information, where the second information includes the second position coordinates. The system on chip responds based on the second position coordinates.

## Description

### CROSS-REFERENCE TO RELATED APPLICATIONS

This application claims priority to Chinese Patent Application No. 202410790277.2, field with the China National Intellectual Property Administration on June 19, 2024 and entitled "TOUCH CONTROL METHOD AND RELATED DEVICE", which is incorporated herein by reference in its entirety.

### TECHNICAL FIELD

This application relates to the field of terminal technologies, and in particular, to a touch control method and a related device.

### BACKGROUND

Currently, most electronic products have touch display screens. As user requirements increase, requirements for sensitivity of touch display screens are increasingly high, and products with smooth touch control and a prompt response are more attractive. Usually, a touch control principle of a touch display screen is: collecting capacitance data, calculating a coordinate position based on the capacitance data, and then sending the coordinate position to a system on chip to make a response. In this manner, the touch display screen needs to calculate position coordinates, in other words, the touch display screen needs to have a specific computing power. Consequently, it is difficult to minimize an area, a thickness, and the like of the touch display screen, which conflicts with a concept of product lightness and thinness.

### SUMMARY

Embodiments of this application provide a touch control method and a related device, to reduce a probability that a touch control failure occurs on a touch display screen, and improve touch control operation experience.

According to a first aspect, a touch control method is provided. The method may be applied to a display system. The display system includes a system on chip and a touch display screen. The method includes: The touch display screen collects first capacitance data. The system on chip receives first information sent by the touch display screen, where the first information includes first capacitance data. The system on chip determines first position coordinates based on the first capacitance data, and responds based on the first position coordinates. The touch display screen collects second capacitance data. The touch display screen obtains second position coordinates based on the second capacitance data when determining that the display system meets a first condition. The system on chip receives second information sent by the touch display screen, where the second information includes the second position coordinates. The system on chip responds based on the second position coordinates.

In this embodiment of this application, after collecting the first capacitance data, the touch display screen may directly send the first capacitance data to the system on chip without calculating the first position coordinates based on the first capacitance data, and the system on chip calculates the position coordinates. In this way, this facilitates implementation of product lightness and thinness; and because the system on chip has a powerful computing power, if the system on chip calculates the position coordinates, calculation accuracy can be improved to some extent, and a probability of a touch control failure can be reduced. In addition, in this embodiment of this application, there are two interaction mechanisms between the touch display screen and the system on chip. One is that the touch display screen sends the capacitance data to the system on chip, and the other one is that the touch display screen sends the position coordinates to the system on chip. In a first mechanism, the computing power (a process of calculating the position coordinates) is borne by the system on chip. In a second mechanism, the computing power is borne by the touch display screen. The two interaction mechanisms may be switched. For example, if the display system meets the first condition, a mechanism between the touch display screen and the system on chip is switched from the first interaction mechanism to the second interaction mechanism. In comparison with a solution in which only the touch display screen bears the computing power (that is, only the second interaction mechanism is supported), the technical solution provided in this embodiment of this application is more flexible, and a probability of a touch control failure is lower.

In a possible design, the system on chip includes a first driver program and a second driver program, both the first driver program and the second driver program are driver programs of the touch display screen, the first driver program supports the first driver protocol, and the second driver program supports the second driver protocol; that the system on chip receives the first information sent by the touch display screen includes: when the system on chip runs the first driver program, receiving the first information sent by the touch display screen, where the first information is based on the first driver protocol; and that the system on chip receives the second information sent by the touch display screen includes: when the system on chip runs the second driver program, receiving the second information sent by the touch display screen, where the second information is based on the second driver protocol.

In this embodiment of this application, the display system may support dual drivers (namely, the first driver program and the second driver program). For example, when the system on chip communicates with the touch display screen based on the first driver program, if the display system meets the first condition (for example, the first driver program is abnormal), the system on chip communicates with the touch display screen based on the second driver program. Therefore, in comparison with a single-driver solution of the display system, a dual-driver solution provided in this embodiment of this application can reduce a probability that a touch control failure occurs on the touch display screen, and improve touch control operation experience.

In a possible design, when the system on chip runs the first driver program, receiving the first information sent by the touch display screen includes: when the system on chip runs the first driver program, reading the first information from a first buffer of the touch display screen; and when the system on chip runs the second driver program, receiving the second information sent by the touch display screen includes: when the system on chip runs the second driver program, reading the first information from a second buffer of the touch display screen.

In this embodiment of this application, the touch display screen includes the first buffer and the second buffer. Information in the first buffer meets the first driver protocol, and information in the second buffer meets the second driver protocol. The system on chip may read the information in the first buffer by running the first driver program, and read the information in the second buffer by running the second driver program. In this manner, communication between the touch display screen and the system on chip is implemented based on dual driver programs.

Optionally, that the system on chip responds based on the first position coordinates or the second position coordinates may include: the system on chip updates display content at the first position coordinates or the second position coordinates, for example, display edited content such as a cursor, a text, a line, or a picture at the first position coordinates or the second position coordinates.

Optionally, that the system on chip determines the first position coordinates based on the first capacitance data, and responds based on the first position coordinates may include: The system on chip determines the first position coordinates and a first operation type based on the first capacitance data, and responds based on the first operation type and the first position coordinates. The first operation type may include a tap operation, a double-tap operation, a touch and hold operation, a slide operation, or the like. In this manner, the system on chip may respond differently for different operation types.

Optionally, that the touch display screen obtains the second position coordinates based on the second capacitance data when determining that the display system meets the first condition may include: The touch display screen obtains the second position coordinates and a second operation type based on the second capacitance data when determining that the display system meets the first condition, where the second information received by the system on chip includes the second position coordinates and the second operation type, and the device on chip responds based on the second position coordinates and the second operation type. The second operation type may include a tap operation, a double-tap operation, a touch and hold operation, a slide operation, or the like.

In a possible design, the first driver program is a touch host process THP driver, and the second driver program is a hardware interface device HID driver.

It should be noted that the first driver program and the second driver program may be other driver programs respectively. This is not limited in this embodiment of this application. Optionally, the first driver program and the second driver program may be the same or different.

In a possible design, that the display system meets the first condition includes at least one of the following: the first driver program is abnormal; a current running system of the system on chip is a second system; a current running application of the system on chip is a second preset application; running load of the system on chip is greater than or equal to a first preset load amount; running load of the touch display screen is less than or equal to a second preset load amount; and the system on chip receives a second operation, where the second operation indicates to switch from the first driver program to the second driver program.

In this embodiment of this application, the display system may support dual drivers namely, the first driver program and the second driver program. When the system on chip communicates with the touch display screen based on the first driver program, if the first driver program is abnormal, or runs in the second system, or runs the second preset application, or the load is higher than the preset load amount, or a user switch operation is received, the system on chip communicates with the touch display screen based on the second driver program, to ensure that a transmission channel between the touch display screen and the system on chip is not interrupted. In comparison with the single-driver solution of the display system, this dual-driver solution can reduce a probability that a touch control failure occurs on the touch display screen, and improve touch control operation experience.

In a possible design, the method further includes: The touch display screen collects third capacitance data. The touch display screen sends third information to the system on chip when determining that the display system meets a second condition, where the third information is based on the first driver protocol, and the third information includes the third capacitance data. The system on chip determines third position coordinates based on the third capacitance data, and responds based on the third position coordinates.

In this embodiment of this application, the display system may support dual drivers namely, the first driver program and the second driver program. When the system on chip communicates with the touch display screen based on the second driver program, if the display system meets the second condition, the display system switches to the first driver program for communication, to ensure that a transmission channel between the touch display screen and the system on chip is not interrupted, and reduce a probability of a touch control failure.

In a possible design, that the display system meets the second condition includes at least one of the following: the first driver program is restored to normal; the second driver program is abnormal; a current running system of the system on chip is a first system; a current running application of the system on chip is a first preset application; running load of the system on chip is less than the first preset load amount; running load of the touch display screen is greater than the second preset load amount; and the system on chip receives a first operation, where the first operation indicates to switch from the second driver program to the first driver program.

In this embodiment of this application, the display system may support dual drivers namely, the first driver program and the second driver program. When the system on chip communicates with the touch display screen based on the second driver program, if the first driver program is restored to normal, or runs in the first system, or runs the first preset application, or the load is lower than the preset load amount, or a user switch operation is received, the system on chip communicates with the touch display screen based on the first driver program, to ensure that a transmission channel between the touch display screen and the system on chip is not interrupted. In comparison with the single-driver solution of the display system, this dual-driver solution can reduce a probability that a touch control failure occurs on the touch display screen, and improve touch control operation experience.

In a possible design, that the system on chip receives the first information sent by the touch display screen includes: The system on chip receives the first information through a first interface, where the first interface is an SPI interface or a USB interface.

In this embodiment of this application, the first driver program may correspond to the first interface, and the first interface may be the SPI interface or the USB interface, and certainly may alternatively be another type of interface. This is not limited in this embodiment of this application.

In a possible design, that the system on chip receives the second information sent by the touch display screen includes: The system on chip receives the second information through a second interface, where the second interface is an I2C interface, an SPI interface, or a USB interface.

In this embodiment of this application, the second driver program may correspond to the second interface, and the second interface may be the I2C interface, the SPI interface, or the USB interface, and certainly may alternatively be another type of interface. This is not limited in this embodiment of this application. Optionally, the first interface and the second interface may be interfaces of a same type or interfaces of different types. This is not limited.

In a possible design, the first information and/or the second information further include/includes first indication information, the first indication information indicates the system on chip to receive other data through a short-range communication module, the other data includes at least one of pressure data, angle data, and acceleration data, and the method further includes: The system on chip receives the other data through the short-range communication module, and responds based on the other data.

In this embodiment of this application, the system on chip may receive the pressure data, the angle data, the acceleration data, and the like through the short-range communication module (for example, Bluetooth). In this way, the pressure data, the angle data, the acceleration data, and the like do not need to be carried in the first information and/or the second information, so that a quantity of bytes of the first information and/or the second information can be reduced, and a data transmission amount of the driver program can be reduced.

In a possible design, the method further includes: The system on chip controls the first driver program to be in a disabled state.

In this embodiment of this application, when the system on chip communicates with the touch display screen based on the first driver program, if the system on chip is switched to the second driver program, the first driver program is disabled, to reduce power consumption.

In a possible design, the method further includes: The touch display screen outputs first prompt information, where the first prompt information is used to prompt that the display system has entered a second mode, and the second mode is a mode in which a touch control function is implemented based on the second driver program.

In this embodiment of this application, after a driver program between the system on chip and the touch display screen is switched from the first driver program to the second driver program, the touch display screen may output the prompt information, to prompt a user to enter the second mode, and user experience is good.

In a possible design, before obtaining the second position coordinates based on the second capacitance data, the method further includes: The touch display screen outputs second prompt information, where the second prompt information is used to prompt whether to enter the second mode, and the second mode is the mode in which the touch control function is implemented based on the second driver program. The touch display screen receives a confirmation operation, where the confirmation operation indicates to confirm entry into the second mode.

In this embodiment of this application, dual-driver switching (for example, switching from the first driver program to the second driver program) between the system on chip and the touch display screen is confirmed by the user, and user experience is good.

In a possible design, the method further includes: The touch display screen outputs third prompt information, where the third prompt information is used to prompt that the display system enters a first mode, and the first mode is a mode in which the touch control function is implemented based on the first driver program.

In this embodiment of this application, after a driver program between the system on chip and the touch display screen is switched from the second driver program to the first driver program, the system on chip may output the prompt information, to prompt the user to enter the first mode, and user experience is good.

In a possible design, before the touch display screen sends the third information to the system on chip, the method further includes: The touch display screen outputs fourth prompt information, where the fourth prompt information is used to prompt whether to enter the first mode, and the first mode is the mode in which the touch control function is implemented based on the first driver program. The touch display screen receives a confirmation operation, where the confirmation operation indicates to confirm entry into the first mode.

In this embodiment of this application, dual-driver switching (for example, switching from the second driver program to the first driver program) between the system on chip and the touch display screen is confirmed by the user, and user experience is good.

In a possible design, that the touch display screen determines that the display system meets the first condition includes: The touch display screen obtains system status information from the system on chip through a third interface, where the system status information indicates at least one of the current running system, the current running application, the current running load, whether the first driver program is normal, and whether the second driver program is normal of the system on chip. The touch display screen determines, based on the system status information, that the display system meets the first condition.

In this embodiment of this application, the system on chip transmits the system status information to the touch display screen through the third interface, so that the touch display screen determines, based on the system status information, whether to switch the driver program, to implement flexible switching between the dual drivers.

In a possible design, the system on chip includes an application and/or a function, and the application and/or the function are/is configured to: collect the system status information, and send the system status information to the touch display screen through the third interface.

In this embodiment of this application, the application and/or the function in the system on chip can collect the system status information, and provide the system status information for the touch display screen, so that the touch display screen determines, based on the system status information, whether to switch the driver program, to implement flexible switching between the dual drivers.

In a possible design, the method further includes: The system on chip displays a first interface through the touch display screen in response to a third operation, where the first interface includes a first identifier of the first driver program and a second identifier of the second driver program.

In this embodiment of this application, the user may view identifiers of the dual drivers in the display system, and experience is good.

**According to a second aspect,** a touch control method is further provided. The touch control method is applied to a system on chip. The system on chip is connected to a touch display screen. The method includes: The system on chip receives first information, where the first information includes first capacitance data. The system on chip determines first position coordinates based on the first capacitance data, and responds based on the first position coordinates. When the system on chip meets a first condition and/or the touch display screen meets a second condition, the system on chip receives second information, where the second information includes second position coordinates, and the second position coordinates are obtained by the touch display screen based on second capacitance data. The system on chip responds based on the second position coordinates.

In a possible design, the system on chip includes a first driver program and a second driver program, both the first driver program and the second driver program are driver programs of the touch display screen, the first driver program supports the first driver protocol, and the second driver program supports the second driver protocol; that the system on chip receives the first information sent by the touch display screen includes: when the system on chip runs the first driver program, receiving the first information sent by the touch display screen, where the first information is based on the first driver protocol; and that the system on chip receives the second information sent by the touch display screen includes: when the system on chip runs the second driver program, receiving the second information sent by the touch display screen, where the second information is based on the second driver program.

In this embodiment of this application, the system on chip may support dual drivers (namely, the first driver program and the second driver program). For example, when the system on chip communicates with the touch display screen based on the first driver program, if the system on chip meets the first condition (for example, the first driver program is abnormal), the system on chip communicates with the touch display screen based on the second driver program. Therefore, in comparison with a single-driver solution, a dual-driver solution provided in this embodiment of this application can reduce a probability that a touch control failure occurs on the touch display screen, and improve touch control operation experience.

In a possible design, the first driver program is a touch host process THP driver, and the second driver program is a hardware interface device HID driver.

In a possible design, that the system on chip meets the first condition includes at least one of the following: the first driver program is abnormal; a current running system of the system on chip is a second system; a current running application of the system on chip is a second preset application; running load of the system on chip is greater than or equal to a first preset load amount; and the system on chip receives a second operation, where the second operation indicates to switch from the first driver program to the second driver program.

In a possible design, that the touch display screen meets the second condition includes: running load of the touch display screen is less than or equal to a second preset load amount.

In a possible design, the method further includes: When the system on chip meets a third condition and/or the touch display screen meets a fourth condition, the system on chip receives third information, where the third information is based on the first driver protocol, and the third information includes third capacitance data collected by the touch display screen. The system on chip determines third position coordinates based on the third capacitance data, and responds based on the third position coordinates.

In a possible design, that the system on chip meets the third condition includes at least one of the following: the first driver program is restored to normal; the second driver program is abnormal; a current running system of the system on chip is a first system; a current running application of the system on chip is a first preset application; running load of the system on chip is less than the first preset load amount; and the system on chip receives a first operation, where the first operation indicates to switch from the second driver program to the first driver program.

In a possible design, that the touch display screen meets the fourth condition includes: running load of the touch display screen is greater than the second preset load amount.

In a possible design, that the system on chip receives the first information includes: The system on chip receives the first information through a first interface, where the first interface is an SPI interface or a USB interface.

In a possible design, that the system on chip receives the second information includes: The system on chip receives the second information through a second interface, where the second interface is an I2C interface, an SPI interface, or a USB interface.

In a possible design, the first information and/or the second information further include/includes first indication information, the first indication information indicates the system on chip to receive other data through a short-range communication module, the other data includes at least one of pressure data, angle data, and acceleration data, and the method further includes: The system on chip receives the other data through the short-range communication module, and responds based on the other data.

In a possible design, the method further includes: The system on chip controls the first driver program to be in a disabled state.

In a possible design, the method further includes: The system on chip sends system status information to the touch display screen through a third interface, where the system status information indicates at least one of the current running system, the current running application, whether the first driver program is normal, whether the second driver program is normal, and the current running load of the system on chip.

In a possible design, the system on chip includes an application and/or a function, and the application and/or the function are/is configured to: collect the system status information, and send the system status information to the touch display screen through the third interface.

In a possible design, the method further includes: The system on chip displays a first interface through the touch display screen in response to a third operation, where the first interface includes a first identifier of the first driver program and a second identifier of the second driver program.

**According to a third aspect,** a touch control method is further provided. The touch control method is applied to a touch display screen. The touch display screen is connected to a system on chip. The method includes: The touch display screen collects first capacitance data. The touch display screen sends first information to the system on chip, where the first information includes the first capacitance data. The touch display screen collects second capacitance data. The touch display screen obtains second position coordinates based on the second capacitance data when determining that the system on chip meets a first condition and/or the touch display screen meets a second condition. The touch display screen sends second information to the system on chip, where the second information includes the second position coordinates.

In a possible design, that the touch display screen sends the first information to the system on chip includes: The touch display screen writes the first information into a first buffer, where the first information is based on a first driver protocol, the first buffer is configured to read the first information in the first buffer when the system on chip runs a first driver program, and the first driver program supports the first driver protocol; and that the touch display screen sends the second information to the system on chip includes: the touch display screen writes the second information into a second buffer, where the second information is based on a second driver protocol, the second buffer is configured to read the second information in the second buffer when the system on chip runs a second driver program, and the second driver program supports the second driver protocol.

In this embodiment of this application, the touch display screen includes the first buffer and the second buffer. Information in the first buffer meets the first driver protocol, and information in the second buffer meets the second driver protocol. The system on chip may read the information in the first buffer by running the first driver program, and read the information in the second buffer by running the second driver program. In this manner, communication between the touch display screen and the system on chip is implemented.

In a possible design, the first driver program is a touch host process THP driver, and the second driver program is a hardware interface device HID driver.

In a possible design, that the system on chip meets the first condition includes at least one of the following: the first driver program is abnormal; a current running system of the system on chip is a second system; a current running application of the system on chip is a second preset application; running load of the system on chip is greater than or equal to a first preset load amount; and the system on chip receives a second operation, where the second operation indicates to switch from the first driver program to the second driver program.

In a possible design, that the touch display screen meets the second condition includes: running load of the touch display screen is less than or equal to a second preset load amount.

In a possible design, the method further includes: The touch display screen collects third capacitance data. The touch display screen sends third information to the system on chip when determining that the system on chip meets a third condition and/or the touch display screen meets a fourth condition, where the third information is based on the first driver protocol, and the third information includes the third capacitance data.

In a possible design, that the system on chip meets the third condition includes at least one of the following: the first driver program is restored to normal; the second driver program is abnormal; a current running system of the system on chip is a first system; a current running application of the system on chip is a first preset application; running load of the system on chip is less than the first preset load amount; and the system on chip receives a first operation, where the first operation indicates to switch from the second driver program to the first driver program.

In a possible design, that the touch display screen meets the fourth condition includes: running load of the touch display screen is greater than the second preset load amount.

In a possible design, that the touch display screen sends the first information to the system on chip includes: The touch display screen sends the first information to the system on chip through a first interface, where the first interface is an SPI interface or a USB interface.

In a possible design, that the touch display screen sends the second information to the system on chip includes: The touch display screen sends the second information to the system on chip through a second interface, where the second interface is an I2C interface, an SPI interface, or a USB interface.

In a possible design, the first information and/or the second information further include/includes first indication information, the first indication information indicates the system on chip to receive other data through a short-range communication module, and the other data includes at least one of pressure data, angle data, and acceleration data.

In a possible design, the method further includes: The touch display screen outputs first prompt information, where the first prompt information is used to prompt that the touch display screen has entered a second mode, and the second mode is a mode in which a touch control function is implemented based on the second driver program.

In a possible design, before the touch display screen sends the second information to the system on chip, the method further includes: The touch display screen outputs second prompt information, where the second prompt information is used to prompt whether to enter the second mode, and the second mode is the mode in which the touch control function is implemented based on the second driver program. The touch display screen receives a confirmation operation, where the confirmation operation indicates to confirm entry into the second mode.

In a possible design, the method further includes: The touch display screen outputs third prompt information, where the third prompt information is used to prompt that the touch display screen has entered a first mode, and the first mode is a mode in which the touch control function is implemented based on the first driver program.

In a possible design, before sending the third information to the system on chip, the method further includes: The touch display screen outputs fourth prompt information, where the fourth prompt information is used to prompt whether to enter the first mode, and the first mode is the mode in which the touch control function is implemented based on the first driver program. The touch display screen receives a confirmation operation, where the confirmation operation indicates to confirm entry into the first mode.

In a possible design, that the touch display screen determines that the system on chip meets the first condition includes: The touch display screen obtains system status information from the system on chip through a third interface, and determines, based on the system status information, that the system on chip meets the first condition, where the system status information indicates at least one of the current running system, the current running application, whether the first driver program is normal, whether the second driver program is normal, and the current running load of the system on chip.

In a possible design, the method further includes: The touch display screen displays a first interface, where the first interface includes a first identifier of the first driver program and a second identifier of the second driver program.

**According to a fourth aspect,** a touch control method **is further provided**. The touch control method is applied to a display system. The display system includes a system on chip and a touch display screen. The method includes: The touch display screen collects first capacitance data. The touch display screen determines first position coordinates based on the first capacitance data. The system on chip receives first information sent by the touch display screen, where the first information includes the first position coordinates. The system on chip responds based on the first position coordinates. The touch display screen collects second capacitance data. The touch display screen sends second information to the system on chip when determining that the display system meets a second condition, where the second information includes the second capacitance data. The system on chip obtains second position coordinates based on the second capacitance data, and responds based on the second position coordinates.

In a possible design, the system on chip includes a first driver program and a second driver program, both the first driver program and the second driver program are driver programs of the touch display screen, the first driver program supports the first driver protocol, and the second driver program supports the second driver protocol; that the system on chip receives the first information sent by the touch display screen includes: when the system on chip runs the first driver program, receiving the first information sent by the touch display screen, where the first information is based on the first driver protocol; and that the system on chip receives the second information sent by the touch display screen includes: when the system on chip runs the second driver program, receiving the second information sent by the touch display screen, where the second information is based on the second driver protocol.

In a possible design, the first driver program is a hardware interface device HID driver, and the second driver program is a touch host process THP driver.

In a possible design, that the display system meets the second condition includes at least one of the following: the first driver program is abnormal; a current running system of the system on chip is a first system; a current running application of the system on chip is a first preset application; running load of the system on chip is less than a first preset load amount; running load of the touch display screen is greater than a second preset load amount; and the system on chip receives a first operation, where the first operation indicates to switch from the first driver program to the second driver program.

In a possible design, the method further includes: The touch display screen collects third capacitance data. The touch display screen determines third position coordinates based on the third capacitance data when determining that the display system meets a first condition. The system on chip receives third information, where the third information is based on the first driver protocol, and the third information includes the third position coordinates. The system on chip responds based on the third position coordinates.

In a possible design, that the display system meets the first condition includes at least one of the following: the first driver program is restored to normal; the second driver program is abnormal; a current running system of the system on chip is a second system; a current running application of the system on chip is a second preset application; running load of the system on chip is greater than or equal to the first preset load amount; running load of the touch display screen is less than or equal to the second preset load amount; and the system on chip receives a second operation, where the second operation indicates to switch from the second driver program to the first driver program.

In a possible design, that the system on chip receives the first information includes: The system on chip receives the first information through a first interface, where the first interface is an I2C interface, an SPI interface, or a USB interface.

In a possible design, sending the second information to the system on chip includes: sending the second information to the system on chip through a second interface, where the second interface is an SPI interface or a USB interface.

In a possible design, the first information and/or the second information further include/includes first indication information, the first indication information indicates the system on chip to receive other data through a short-range communication module, the other data includes at least one of pressure data, angle data, and acceleration data, and the method further includes: The system on chip receives the other data through the short-range communication module, and responds based on the other data.

In a possible design, the method further includes: The system on chip controls the first driver program to be in a disabled state.

In a possible design, the method further includes: The touch display screen outputs first prompt information, where the first prompt information is used to prompt that the display system has entered a second mode, and the second mode is a mode in which a touch control function is implemented based on the second driver program.

In a possible design, before sending the second information to the system on chip, the method further includes: The touch display screen outputs second prompt information, where the second prompt information is used to prompt whether to enter the second mode, and the second mode is the mode in which the touch control function is implemented based on the second driver program. The touch display screen receives a confirmation operation, where the confirmation operation indicates to confirm entry into the second mode.

In a possible design, the method further includes: The touch display screen outputs third prompt information, where the third prompt information is used to prompt that the display system enters a first mode, and the first mode is a mode in which the touch control function is implemented based on the first driver program.

In a possible design, before determining the third position coordinates based on the third capacitance data, the method further includes: The touch display screen outputs fourth prompt information, where the fourth prompt information is used to prompt whether to enter the first mode, and the first mode is the mode in which the touch control function is implemented based on the first driver program. The touch display screen receives a confirmation operation, where the confirmation operation indicates to confirm entry into the first mode.

In a possible design, that the touch display screen determines that the display system meets the second condition includes: The touch display screen obtains system status information from the system on chip through a third interface, where the system status information indicates at least one of the current running system, the current running application, the current running load, whether the first driver program is normal, and whether the second driver program is normal of the system on chip. The touch display screen determines, based on the system status information, that the display system meets the second condition.

In a possible design, the system on chip includes an application and/or a function, and the application and/or the function are/is configured to: collect the system status information, and send the system status information to the touch display screen through the third interface.

In a possible design, the method further includes: The system on chip displays a first interface through the touch display screen in response to a third operation, where the first interface includes a first identifier of the first driver program and a second identifier of the second driver program.

**According to a fifth aspect,** a touch control method **is further provided**. The touch control method is applied to a system on chip. The system on chip is connected to a touch display screen. The method includes: The system on chip receives first information, where the first information includes first position coordinates, and the first coordinate position is obtained by the touch display screen based on first capacitance data. The system on chip responds based on the first position coordinates. The system on chip receives second information when the system on chip meets a first condition and/or the touch display screen meets a second condition, where the second information includes second capacitance data collected by the touch display screen. The system on chip obtains second position coordinates based on the second capacitance data, and responds based on the second position coordinates.

In a possible design, the system on chip includes a first driver program and a second driver program, both the first driver program and the second driver program are driver programs of the touch display screen, the first driver program supports the first driver protocol, and the second driver program supports the second driver protocol; that the system on chip receives the first information sent by the touch display screen includes: when the system on chip runs the first driver program, receiving the first information sent by the touch display screen, where the first information is based on the first driver protocol; and that the system on chip receives the second information sent by the touch display screen includes: when the system on chip runs the second driver program, receiving the second information sent by the touch display screen, where the second information is based on the second driver protocol.

In a possible design, the first driver program is a hardware interface device HID driver, and the second driver program is a touch host process THP driver.

In a possible design, that the system on chip meets the first condition includes at least one of the following: the first driver program is abnormal; a current running system of the system on chip is a first system; a current running application of the system on chip is a first preset application; running load of the system on chip is less than a first preset load amount; and the system on chip receives a first operation, where the first operation indicates to switch from the first driver program to the second driver program.

In a possible design, that the touch display screen meets the second condition includes: running load of the touch display screen is greater than a second preset load amount.

In a possible design, the method further includes: When the system on chip meets a third condition and/or the touch display screen meets a fourth condition, the system on chip receives third information, where the third information is based on the first driver protocol, the third information includes third position coordinates, and the third position coordinates are obtained by the touch display screen based on third capacitance data. The system on chip responds based on the third position coordinates.

In a possible design, that the system on chip meets the third condition includes at least one of the following: the first driver program is restored to normal; the second driver program is abnormal; a current running system of the system on chip is a second system; a current running application of the system on chip is a second preset application; running load of the system on chip is greater than or equal to the first preset load amount; and the system on chip receives a second operation, where the second operation indicates to switch from the second driver program to the first driver program.

In a possible design, that the touch display screen meets the fourth condition includes: running load of the touch display screen is less than or equal to the second preset load amount.

In a possible design, that the system on chip receives the first information includes: The system on chip receives the first information through a first interface, where the first interface is an I2C interface, an SPI interface, or a USB interface.

In a possible design, that the system on chip receives the second information includes: The system on chip receives the second information through a second interface, where the second interface is an SPI interface or a USB interface.

In a possible design, the first information and/or the second information further include/includes first indication information, the first indication information indicates the system on chip to receive other data through a short-range communication module, the other data includes at least one of pressure data, angle data, and acceleration data, and the method further includes: The system on chip receives the other data through the short-range communication module, and responds based on the other data.

In a possible design, the method further includes: The system on chip controls the first driver program to be in a disabled state.

In a possible design, the method further includes: The system on chip sends system status information to the touch display screen through a third interface, where the system status information indicates at least one of the current running system, the current running application, the current running load, whether the first driver program is normal, and whether the second driver program is normal of the system on chip.

In a possible design, the system on chip includes an application and/or a function, and the application and/or the function are/is configured to: collect the system status information, and send the system status information to the touch display screen through the third interface.

In a possible design, the method further includes: The system on chip displays a first interface through the touch display screen in response to a third operation, where the first interface includes a first identifier of the first driver program and a second identifier of the second driver program.

**According to a sixth aspect,** a touch control method **is further provided**. The touch control method is applied to a touch display screen. The touch display screen is connected to a system on chip. The method includes: The touch display screen collects first capacitance data. The touch display screen determines first position coordinates based on the first capacitance data. The touch display screen sends first information to the system on chip, where the first information includes the first position coordinates. The touch display screen collects second capacitance data. The touch display screen sends second information to the system on chip when determining that the system on chip meets a first condition and/or the touch display screen meets a second condition, where the second information includes the second capacitance data.

In a possible design, that the touch display screen sends the first information to the system on chip includes: The touch display screen writes the first information into a first buffer, where the first information is based on a first driver protocol, the first buffer is configured to read the first information in the first buffer when the system on chip runs a first driver program, and the first driver program supports the first driver protocol; and that the touch display screen sends the second information to the system on chip includes: the touch display screen writes the second information into a second buffer, where the second information is based on a second driver protocol, the second buffer is configured to read the second information in the second buffer when the system on chip runs a second driver program, and the second driver program supports the second driver protocol.

In a possible design, the first driver program is a hardware interface device HID driver, and the second driver program is a touch host process THP driver.

In a possible design, that the system on chip meets the first condition includes at least one of the following: the first driver program is abnormal; a current running system of the system on chip is a first system; a current running application of the system on chip is a first preset application; running load of the system on chip is less than a first preset load amount; and the system on chip receives a first operation, where the first operation indicates to switch from the first driver program to the second driver program.

In a possible design, that the touch display screen meets the second condition includes: running load of the touch display screen is greater than a second preset load amount.

In a possible design, the method further includes: The touch display screen collects third capacitance data. The touch display screen determines third position coordinates based on the third capacitance data when determining that the system on chip meets a third condition and/or the touch display screen meets a fourth condition. The touch display screen sends third information to the system on chip, where the third information is based on the first driver protocol, and the third information includes the third position coordinates.

In a possible design, that the system on chip meets the third condition includes at least one of the following: the first driver program is restored to normal; the second driver program is abnormal; a current running system of the system on chip is a second system; a current running application of the system on chip is a second preset application; running load of the system on chip is greater than or equal to the first preset load amount; and the system on chip receives a second operation, where the second operation indicates to switch from the second driver program to the first driver program.

In a possible design, that the touch display screen meets the fourth condition includes: running load of the touch display screen is less than or equal to the second preset load amount.

In a possible design, that the touch display screen sends the first information to the system on chip includes: The touch display screen sends the first information to the system on chip through a first interface, where the first interface is an I2C interface, an SPI interface, or a USB interface.

In a possible design, that the touch display screen sends the second information to the system on chip includes: The touch display screen sends the second information to the system on chip through a second interface, where the second interface is an SPI interface or a USB interface.

In a possible design, the first information and/or the second information further include/includes first indication information, the first indication information indicates the system on chip to receive other data through a short-range communication module, and the other data includes at least one of pressure data, angle data, and acceleration data.

In a possible design, the method further includes: The first driver program is in a disabled state.

In a possible design, the method further includes: The touch display screen outputs first prompt information, where the first prompt information is used to prompt that the display system has entered a second mode, and the second mode is a mode in which a touch control function is implemented based on the second driver program.

In a possible design, before sending the second information to the system on chip, the method further includes: The touch display screen outputs second prompt information, where the second prompt information is used to prompt whether to enter the second mode, and the second mode is the mode in which the touch control function is implemented based on the second driver program. The touch display screen receives a confirmation operation, where the confirmation operation indicates to confirm entry into the second mode.

In a possible design, the method further includes: The touch display screen outputs third prompt information, where the third prompt information is used to prompt that the display system enters a first mode, and the first mode is a mode in which the touch control function is implemented based on the first driver program.

In a possible design, before determining the third position coordinates based on the third capacitance data, the method further includes: The touch display screen outputs fourth prompt information, where the fourth prompt information is used to prompt whether to enter the first mode, and the first mode is the mode in which the touch control function is implemented based on the first driver program. The touch display screen receives a confirmation operation, where the confirmation operation indicates to confirm entry into the first mode.

In a possible design, that the touch display screen determines that the system on chip meets the first condition includes: The touch display screen obtains system status information from the system on chip through a third interface, where the system status information indicates at least one of the current running system, the current running application, the current running load, whether the first driver program is normal, and whether the second driver program is normal of the system on chip. The touch display screen determines, based on the system status information, that the system on chip meets the first condition.

In a possible design, the method further includes: The touch display screen displays a first interface in response to a third operation, where the first interface includes a first identifier of the first driver program and a second identifier of the second driver program.

**According to a seventh aspect,** a display system is further provided. The display system includes a system on chip and a touch display screen.

The system on chip is configured to perform the steps of the system on chip according to the first aspect or the fourth aspect, or perform the method according to the second aspect or the fifth aspect; and
the touch display screen is configured to perform the steps of the touch display screen according to the first aspect or the fourth aspect, or perform the method according to the third aspect or the sixth aspect.

According to an eighth aspect, a system on chip is further provided. The system on chip includes a processing circuit and a storage medium. The storage medium stores instructions; and when the instructions are executed by the processing circuit, the steps of the system on chip according to the first aspect or the fourth aspect are implemented, or the method according to the second aspect or the fifth aspect is implemented.

According to a ninth aspect, a touch display screen is further provided. The touch display screen includes a touch panel and a touch panel integrated circuit TPIC.

The touch panel is configured to display an interface.

The TPIC is configured to perform the steps of the touch display screen according to the first aspect or the fourth aspect, or perform the method according to the third aspect or the sixth aspect.

According to a tenth aspect, an electronic device is further provided. The electronic device includes the display system according to the seventh aspect.

According to an eleventh aspect, an electronic device is further provided. The electronic device includes the system on chip according to the eighth aspect, and/or the touch display screen according to the ninth aspect.

According to a twelfth aspect, a computer-readable storage medium is further provided. The computer-readable storage medium stores a computer program; and when the computer program is executed by a processor, the method according to any one of the first aspect to the sixth aspect is implemented.

According to a thirteenth aspect, a computer program product is further provided. The computer program product includes a computer program; and when the computer program is run on a computer, the computer is enabled to perform the method according to any one of the first aspect to the sixth aspect.

For technical effect that can be achieved in the second aspect to the thirteenth aspect, refer to descriptions of technical effect that can be achieved in the corresponding design solutions in the first aspect. Details are not described herein again in this application.

### BRIEF DESCRIPTION OF DRAWINGS

FIG. 1 is a diagram of an electronic device according to an embodiment of this application;
FIG. 2A is another diagram of an electronic device according to an embodiment of this application;
FIG. 2B is a diagram of a GUI of an electronic device according to an embodiment of this application;
FIG. 3A is another diagram of an electronic device according to an embodiment of this application;
FIG. 3B is another diagram of a GUI of an electronic device according to an embodiment of this application;
FIG. 4A is still another diagram of an electronic device according to an embodiment of this application;
FIG. 4B is still another diagram of a GUI of an electronic device according to an embodiment of this application;
FIG. 5 is a schematic flowchart of a touch control method according to an embodiment of this application;
FIG. 6Ais a diagram of first information according to an embodiment of this application;
FIG. 6B is a diagram of second information according to an embodiment of this application;
FIG. 7 is another schematic flowchart of a touch control method according to an embodiment of this application;
FIG. 8 is a diagram of a software system of an electronic device according to an embodiment of this application;
FIG. 9 is a diagram of interaction between modules in a software system of an electronic device according to an embodiment of this application;
FIG. 10 is another diagram of interaction between modules in a software system of an electronic device according to an embodiment of this application;
FIG. 11 is another diagram of an electronic device according to an embodiment of this application; and
FIG. 12 is still another diagram of an electronic device according to an embodiment of this application.

### DESCRIPTION OF EMBODIMENTS

The following describes some terms in embodiments of this application, to facilitate understanding of a person skilled in the art.

In embodiments of this application, "at least one" includes one or more, and "a plurality of" means two or more. In addition, it should be understood that in descriptions of this specification, words such as "first" and "second" are merely intended for purposes of description, and should not be understood as expressing or implying relative importance or a sequence. For example, a first driver and a second driver do not represent importance of the first driver and the second driver or represent a sequence of the first driver and the second driver, and are merely used for distinguishing and description. The term "and/or" in embodiments of this application describes only an association relationship and represents that three relationships may exist. For example, A and/or B may represent the following three cases: Only A exists, both A and B exist, and only B exists. In addition, the character "/" in this specification usually indicates an "or" relationship between the associated objects.

The orientation terms mentioned in embodiments of this application, for example, "up", "down", "left", "right", "inside", and "outside", are merely directions based on the accompanying drawings. Therefore, the orientation terms are used to better and more clearly describe and understand embodiments of this application, instead of indicating or implying that a specified apparatus or element should have a specific orientation and be constructed and operated in a specific orientation. Therefore, this cannot be understood as a limitation on embodiments of this application.

Reference to "an embodiment", "in some examples", "some embodiments", or the like described in this specification means that a specific feature, structure, or characteristic described with reference to the embodiment is included in one or more embodiments of this specification. Therefore, statements such as "in some examples", "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specially emphasized in another manner. The terms "include", "have", and their variants all mean "include but are not limited to", unless otherwise specifically emphasized in another manner.

A touch control method provided in embodiments of this application is applicable to an electronic device. The electronic device may be any device having a touch display screen. For example, the electronic device may be a convenient device, for example, a mobile phone, a tablet computer, a notebook computer, a personal computer (personal computer, PC), an ultra-mobile personal computer (ultra-mobile personal computer, UMPC), a netbook, or a personal digital assistant (personal digital assistant, PDA); or may be an entertainment device, for example, a television or a game console; or may be a wearable device, for example, a watch or a band; or may be a vehicle-mounted device, for example, an apparatus like a display apparatus mounted on a vehicle. Certainly, the vehicle may alternatively be replaced with another carrier or transportation means like a train, an aircraft, or a mobile platform; or may be a virtual reality (Virtual Reality, VR) device, an augmented reality (Augmented Reality, AR) device, a mixed reality (Mixed Reality, MR) device, or the like. In conclusion, a specific type of the electronic device is not limited in embodiments of this application. For ease of understanding, this specification mainly uses an example in which the electronic device is a notebook computer or a tablet computer for description. Optionally, the notebook computer may be a two-in-one notebook computer.

In embodiments of this application, an operating system (Operating System, OS) of the electronic device may be any type of operating system, for example, may be an Android (Android)^{®} system, a Harmony (Harmony)^{®} system, a Linux^{®} system, an iOS^{®} system, a Windows^{®} system, a MAC^{®} system, a Chrome^{®} system, or a Unix^{®} system. For ease of understanding, this specification mainly uses the Windows^{®} operating system as an example for description.

In embodiments of this application, the electronic device has a touch control function. For example, the electronic device may include a touch control apparatus, configured to implement the touch control function. Optionally, the touch control apparatus may include any type of apparatus such as a touch display screen, a touchpad, a handle, a keyboard, or a mouse. This is not limited in embodiments of this application. Optionally, the touch control apparatus and the electronic device may be integrally designed or separately designed. Being integrally designed is used as an example. The touch control apparatus may be integrated into the electronic device. For example, a touch display screen and/or a touchpad are integrated into the electronic device. Being separately designed is used as an example. The touch control apparatus and the electronic device may be two completely independent devices. For example, the touch control apparatus is connected to the electronic device, and the connection may include a wired connection or a wireless connection. The wired connection is used as an example. The electronic device may provide an interface for the wired connection to the touch control apparatus. The interface may be, for example, a universal serial bus (Universal Serial Bus, USB) interface or another interface. For ease of understanding, an example in which the touch display screen is integrated into the electronic device is used for description in this specification.

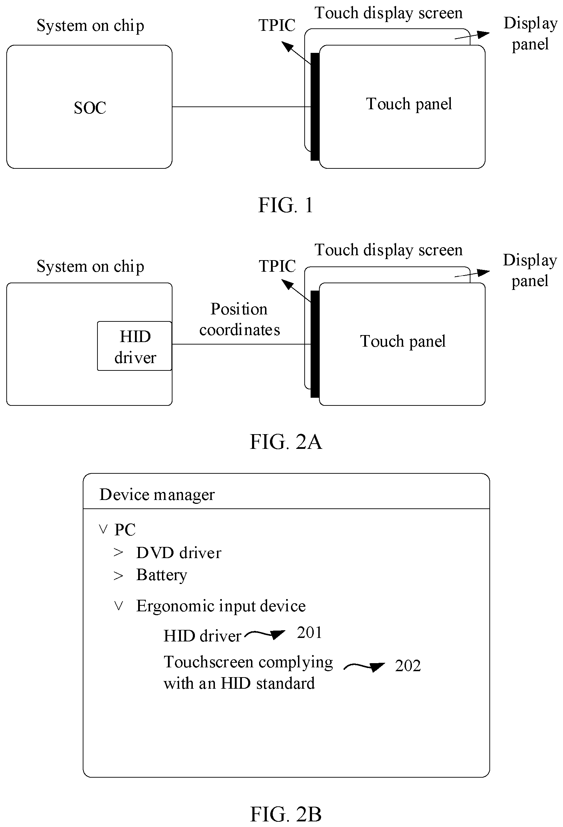

For example, FIG. 1 is a diagram of a display system according to an embodiment of this application. The display system may be disposed in an electronic device, and the electronic device may be various devices listed above, for example, a notebook computer or a tablet computer. As shown in FIG. 1, the display system includes a system on chip (System on Chip, SOC) and a touch display screen. It should be understood that FIG. 1 shows only some components, in the display system, related to embodiments of this application. Actually, the display system may include more components than those in FIG. 1, and the components are not enumerated herein.

As shown in FIG. 1, the SOC may be understood as a nerve center and a command center of the display system and is responsible for processing various tasks. For example, the SOC may include one or more processors, for example, one or more of an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and the like.

As shown in FIG. 1, the touch display screen may include a display panel (display panel, DP) and a touch panel (Touch Panel, TP). The display panel is configured to display information, for example, an image, a video, and a text. Optionally, the display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. The touch panel is configured to support any suitable object or accessory, for example, a finger or a stylus of a user in performing an operation on the touch panel or near the touch panel. Optionally, the touch panel may be implemented by using any one of a plurality of technologies such as a resistive type, a capacitive type, an infrared ray, and a surface acoustic wave. Certainly, the touch panel may alternatively be implemented by using another possible future technology. The touch panel using a capacitive technology is used as an example. When the user performs an operation on the touch panel by using any suitable object or accessory, for example, a finger or a stylus, capacitance on the touch panel changes, and capacitance data is generated. The capacitance data may be used to calculate a specific operation position (for example, position coordinates), to accurately respond to the operation. It should be noted that in FIG. 1, an example in which the display panel is located at a lower layer of the touch panel and the touch panel is disposed on a surface of the electronic device is used. However, a position relationship between the display panel and the touch panel is not limited in embodiments of this application.

As shown in FIG. 1, the touch display screen may include a touch panel integrated circuit (Touch Panel Integrated Circuit, TPIC). The TPIC is connected to the touch panel, and may be understood as a processing center of the touch panel. The touch panel using a capacitive technology is used as an example. The TPIC may be configured to collect capacitance data generated on the touch panel. Optionally, the TPIC may further calculate the capacitance data, for example, calculate a specific operation position (for example, position coordinates) based on the capacitance data. It should be noted that in FIG. 1, the TPIC located inside the touch display screen is used as an example. It should be understood that to avoid blocking the touch panel and the display panel, the TPIC may be disposed at an edge position (for example, a non-display area) of the touch display screen. Certainly, the TPIC may be alternatively located at another position. For example, the touch display screen is disposed in full screen, and the TPIC may be located behind the touch display screen, or the TPIC may be located outside the touch display screen. In conclusion, the position of the TPIC is not limited in embodiments of this application.

**FIG. 1** **is still used as an example below to describe a touch control method provided in embodiments of this application.**

In FIG. 1, the SOC needs to respond to an operation performed by the user on the touch panel. Therefore, communication needs to be established between the TPIC and the SOC, to facilitate information transfer. A possible manner is as follows: The SOC includes a driver program of the touch display screen, and the driver program is configured to implement information transmission between the TPIC and the SOC. For ease of understanding, a driver program (a driver for short in this specification) is first briefly described. The driver program is a software program used to implement normal communication between the SOC and other hardware. The SOC may include more than one driver program, for example, may further include hardware such as a graphics adapter, an audio adapter, and a network adapter, and correspondingly there are a graphics adapter driver, an audio adapter driver, a network adapter driver, and the like, so that the graphics adapter, the audio adapter, the network adapter, and the like can be used normally; or if the other hardware (for example, a mouse, a keyboard, or a handle) is externally connected, the SOC may install a corresponding driver program, so that the other hardware can be used normally.

In some embodiments, the driver program of the touch display screen may be a hardware interface device (Hardware Interface Device, HID) driver. For example, as shown in FIG. 2A, the TPIC communicates with the SOC through the HID driver. It should be understood that when the TPIC and the SOC transmit information through the HID driver, a specific protocol needs to be met, for example, an HID standard protocol (an HID protocol for short). The protocol may specify a format, content, and the like of the transmitted information. The HID protocol specifying that information content transferred by the TPIC to the SOC is position coordinates is used as an example. After collecting capacitance data on the touch panel, the TPIC needs to calculate the position coordinates based on the capacitance data, and then sends the position coordinates to the SOC based on the HID protocol through the HID driver. Therefore, the TPIC needs to have a specific computing power, and the computing power is used to calculate the position coordinates based on the capacitance data. A possible manner is as follows: The TPIC includes a processing unit (not shown in FIG. 2A), and the processing unit is configured to obtain the position coordinates through calculation based on the capacitance data. In consideration of factors such as an area and costs of the touch panel, the processing unit may be a small processing unit or a micro processing unit, for example, a micro control unit (Micro Control Unit, MCU). Therefore, a computing capability of the processing unit is limited. Once the processing unit is overloaded, specific position coordinates of an operation cannot be calculated, easily resulting in a touch control failure.

Optionally, the electronic device may display the HID driver in a specific manner. For example, after the electronic device is powered on, the user may view the HID driver in the electronic device. For example, the electronic device opens an interface of a device manager in response to a user operation, and the interface may display related information of the HID driver. For example, FIG. 2B is a diagram of an interface of a device manager in an electronic device. As shown in FIG. 2B, the interface of the device manager includes a directory, the target includes an option of an ergonomic input device, and the option includes an identifier 201, and optionally further includes an identifier 202. The identifier 201 indicates an HID driver. For example, the identifier 201 may be an "I2C HID device". The identifier 202 indicates a touch display screen, in the electronic device, complying with an HID standard protocol. It should be noted that forms of the identifier 201 and the identifier 202 are not limited in this embodiment of this application, and may be various types of texts, icons, images, and the like.

In this embodiment of this application, the foregoing mode in which a TPIC bears a computing power may be referred to as a touch post processing (Touch Post Processing, TPP) mode.

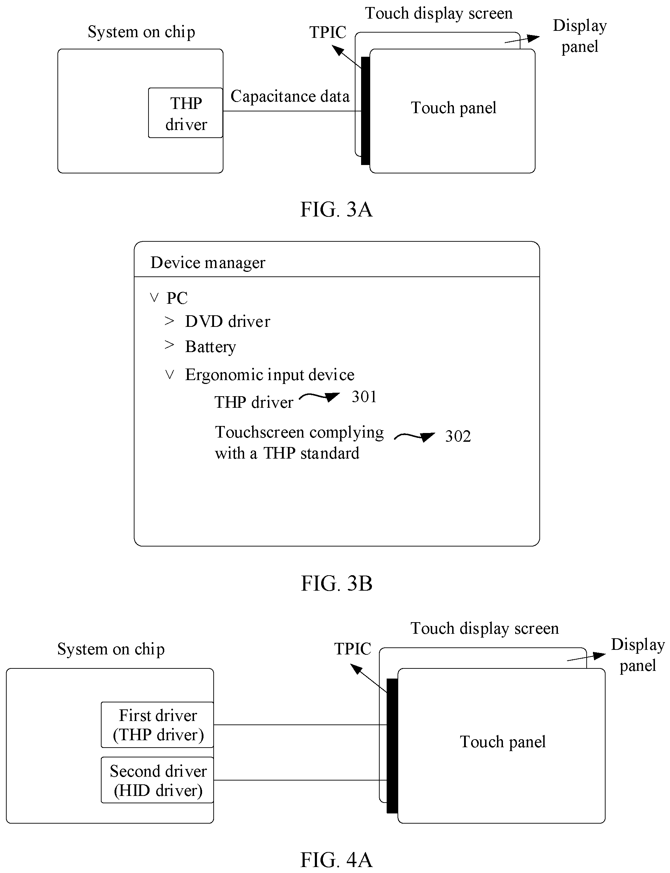

As described above, the TPIC has a limited computing capability. Once the TPIC is overloaded, a touch control failure is caused. To alleviate load of the computing power of the TPIC, a possible manner is as follows: The computing power of the TPIC is transferred to an SOC, that is, the SOC bears a process of calculating capacitance data to position coordinates. In this way, the TPIC only needs to send the collected capacitance data to the SOC, and does not need to calculate position information, to reduce the computing power. In this manner, the information transmitted by the TPIC to the SOC is the capacitance data, not the position coordinates. Consequently, the HID driver cannot be used for transmission. One solution is that a driver program of the touch display screen is a touch host process (Touch Host Process, THP) driver. For example, as shown in FIG. 3A, the TPIC communicates with the SOC through the THP driver. A difference between the THP driver and the HID driver is as follows: The HID driver supports the HID protocol, and the HID protocol specifies that the transmitted content is the position coordinates; and the THP driver supports a THP protocol, and the THP protocol specifies that the transmitted content may be the capacitance data. Therefore, in FIG. 3A, the TPIC may send the collected capacitance data to the SOC based on the THP protocol through the THP driver, and the SOC performs calculation based on the capacitance data to obtain the position coordinates. In this way, the computing power of the TPIC is transferred to the SOC, and the SOC has a powerful computing power, so that computing accuracy can be improved to some extent.

Optionally, the electronic device may display the THP driver in a specific manner. For example, after the electronic device is powered on, the user may view the THP driver in the electronic device. For example, the electronic device opens an interface of a device manager in response to a user operation, and the interface may display related information of the THP driver. For example, FIG. 3B is a diagram of an interface of a device manager in an electronic device. As shown in FIG. 3B, the interface of the device manager includes a directory, the directory includes an option of an ergonomic input device, and the option includes an identifier 301, and optionally further includes an identifier 302. The identifier 301 indicates a THP driver. For example, the identifier 301 may be a "USB THP device". The identifier 302 indicates a touch display screen complying with a THP standard protocol. It should be noted that forms of the identifier 301 and the identifier 302 are not limited in this embodiment of this application, and may be various types of texts, icons, images, and the like.

In this embodiment of this application, the foregoing mode in which the computing power of the TPIC is transferred to the SOC may be referred to as a touch host process (Touch Host Process, THP) mode.

In the foregoing embodiment, two modes are listed: the TPP mode and the THP mode. The TPP mode corresponds to the HID driver, and the THP mode corresponds to the THP driver. In this embodiment of this application, the display system may support only the TPP mode, or support only the THP mode, or support both the TPP mode and the THP mode. For example, only the TPP mode is supported. The display system may include the HID driver, and does not include the THP driver. For example, only the THP mode is supported. The display system may include the THP driver, and does not include the HID driver. Regardless of whether only the TPP mode or THP mode is supported, a single driver is used. Once the driver is abnormal, a touch control failure is caused. Therefore, in the following embodiments of this specification, an example in which the display system supports both the TPP mode and the THP mode is used, that is, the display system includes dual drivers: the HID driver and the THP driver. When one driver is abnormal, the other driver may be used for communication. In comparison with a single-driver manner, a probability of a touch control failure is reduced.

**The following describes a dual-driver touch control solution provided in embodiments of this application with reference to the accompanying drawings.**

FIG. 4A is a diagram of a display system according to an embodiment of this application. The display system may be disposed in an electronic device, and the electronic device may be various devices listed above, for example, a notebook computer or a tablet computer. As shown in FIG. 4A, the display system includes a system on chip SOC and a touch display screen. For the SOC and the touch display screen, refer to the foregoing descriptions. For brevity of this specification, details are not described herein again. As shown in FIG. 4A, the SOC includes a first driver and a second driver, and the two drivers are both configured to implement communication between the SOC and the TPIC.

In some embodiments, the first driver and the second driver may be the same. For example, both the first driver and the second driver are HID drivers. For the HID driver, refer to the foregoing descriptions. Alternatively, both the first driver and the second driver are THP drivers. For the THP driver, refer to the foregoing descriptions. Alternatively, the first driver and the second driver may be different. For example, the first driver is an HID driver, and the second driver is a THP driver; or the first driver is a THP driver, and the second driver is an HID driver. The first driver supports a first protocol, and the second driver supports a second protocol. Optionally, the first protocol and the second protocol may be the same or different. For example, when both the first driver and the second driver are HID drivers, both the first protocol and the second protocol are HID protocols. For the HID protocol, refer to the foregoing descriptions. Alternatively, when both the first driver and the second driver are THP drivers, both the first protocol and the second protocol are THP protocols. For the THP protocol, refer to the foregoing descriptions. Alternatively, when the first driver is a THP driver, and the second driver is an HID driver, the first protocol is a THP protocol, and the second protocol is an HID protocol. For ease of description, in the following embodiments of this specification, an example in which the first driver is a THP driver and the second driver is an HID driver is used for description.

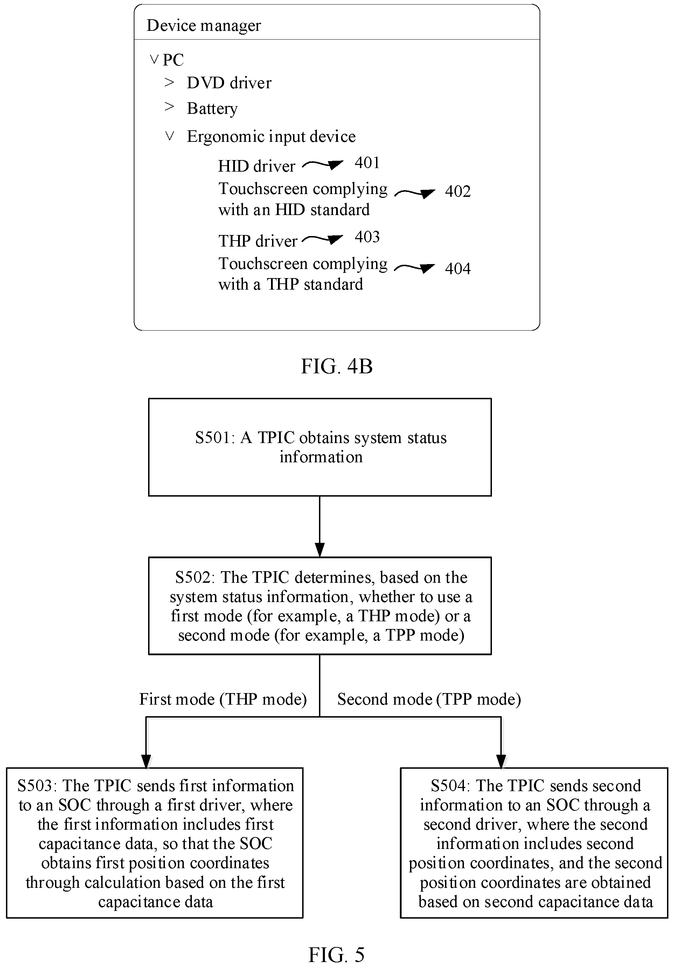

Optionally, the electronic device may display dual drivers in a specific manner. For example, after the electronic device is powered on, the user may view the dual drivers in the electronic device. For example, the electronic device opens an interface of a device manager in response to a user operation, and the interface may display related information of the dual drivers. For example, FIG. 4B is a diagram of an interface of a device manager in an electronic device. As shown in FIG. 4B, the interface of the device manager includes a directory, the directory includes an option of an ergonomic input device, and the option includes an identifier 401, an identifier 402, an identifier 403, and an identifier 404. A sorting order of the four identifiers is not limited in this embodiment of this application. The identifier 401 indicates an HID driver. The identifier 402 indicates a touch display screen, in the electronic device, complying with an HID standard protocol. The identifier 403 indicates a THP driver. The identifier 404 indicates a touch display screen, in the electronic device, complying with a THP standard protocol. It should be understood that the touch display screen indicated by the identifier 402 and the touch display screen indicated by the identifier 404 are the same, that is, the electronic device has only one touch display screen, but corresponds to two touch drivers, namely, an HID driver and a THP driver.

**The following continues to use** **FIG. 4A** **as an example to describe a dual-driver touch control method provided in embodiments of this application.**

For example, FIG. 5 is a schematic flowchart of a touch control method according to an embodiment of this application. The method may be applied to a display system, and the display system includes, for example, a structure shown in FIG. 4A. The display system may be disposed in an electronic device, and the electronic device may be the devices listed above, for example, a notebook computer or a tablet computer. As shown in FIG. 5, the procedure includes the following steps.

S501: A TPIC obtains system status information.

Optionally, the system status information may include at least one of information a to information e. The information a indicates a current running system of the electronic device. For example, the information a may be an identifier, a name, or the like of the current running system. In this embodiment of this application, the electronic device may include more than one system. Two systems, for example, a first system and a second system, are used as an example. When the electronic device currently runs in the first system, the information a indicates the first system. When the electronic device currently runs in the second system, the information a indicates the second system. In an example, the first system may be a main operating system, for example, a Window system (Win OS for short), and the second system may be, for example, a pre-operating system, for example, a Pre OS (Pre OS) system. The Pre OS system may include a system that is entered by the electronic device before the main operating system is loaded after the electronic device is powered on or a system that is entered after the electronic device is restarted. Optionally, the restart may be a restart related to the operating system, for example, performing system partitioning or modifying a key system file. In another example, the first system may be a host (host) system, and the second system may be a guest (guest) system. The host system may be an operating system running on hardware of the electronic device, and the guest system may be understood as an operating system running on a virtual machine or a container in the electronic device. The information b indicates whether a first driver is abnormal. For example, when the first driver is normal, the information b is represented by 1; or when the first driver is abnormal, the information b is represented by 0. The information c indicates whether a second driver is abnormal. For example, when the second driver is normal, the information c is represented by 1; or when the second driver is abnormal, the information c is represented by 0. The information d indicates a current running application of the electronic device. For example, the information d may include a name of the current running application. Optionally, the current running application may include a foreground running application and/or a background running application. The information e indicates current running load of the electronic device. Optionally, the current running load may be described by using at least one of CPU usage and memory resource usage. The foregoing lists several types of specific information included in the system status information. It may be understood that the system status information may further include more information. This is not limited in this embodiment of this application.

Optionally, a possible manner in which the TPIC obtains the system status information is as follows: The TPIC may be connected to an SOC through a third interface, and the TPIC receives, through the third interface, the system status information sent by the SOC. For example, the third interface may be a general-purpose input/output (general-purpose input/output, GPIO) interface or another interface. This is not limited in this embodiment of this application. In this manner, the SOC needs to collect the system status information. A possible manner is as follows: The SOC includes an application and/or a function used to monitor a system status, and the application and/or the function may collect the system status information in real time. Optionally, the application and/or function may be a system-level application and/or function, and certainly may alternatively be a third-party application and/or function. For example, the application and/or the function may be a maintenance and test application, for example, a mobile phone manager application or a computer manager application.

S502: The TPIC determines, based on the system status information, whether to use a first mode (for example, a THP mode) or a second mode (for example, a TPP mode). If the first mode is used, S503 is performed. If the second mode is used, S504 is performed.

In this embodiment of this application, S502 may include at least one of the following manners:
Manner 1: When determining, based on the system status information, that the current running system is the first system, the TPIC uses the first mode; otherwise, the TPIC uses the second mode. For example, the system status information includes the information a, the information a indicates the current running system, and the TPIC may determine, based on the information a, whether the current running system is the first system. As described above, the first system is the main operating system or the host system, and the second system is the pre-operating system or the guest system. In this embodiment of this application, in consideration that in the main operating system or the host system, a touch control requirement is high; and if the second mode (a TPP mode) is used, the TPIC cannot bear an excessive computing power, and consequently a touch control failure is easily caused. Therefore, in the main operating system or the host system, the first mode (namely, a THP mode) is used to reduce a probability of the touch control failure.
Manner 2: When determining, based on the system status information, that the first driver is normal, the TPIC uses the first mode; otherwise, the TPIC uses the second mode. For example, the system status information includes the information b, the information b indicates whether the first driver is abnormal, and the TPIC may determine, based on the information b, whether the first driver is abnormal.
Manner 3: When determining, based on the system status information, that the second driver is abnormal, the TPIC uses the first mode; otherwise, the TPIC uses the second mode. For example, the system status information includes the information c, the information c indicates whether the second driver is abnormal, and the TPIC may determine, based on the information c, whether the second driver is abnormal.
Manner 4: When determining, based on the system status information, that the current running application is a first preset application, the TPIC uses the first mode; otherwise, the TPIC uses the second mode. For example, the first preset application may be an application having a high touch control requirement, for example, a drawing application, a game application, or a conference application. When an application having a high touch control requirement is considered, if the second mode (a TPP mode) is used, the TPIC cannot bear an excessive computing power, and consequently a touch control failure is easily caused. Therefore, the first mode (namely, a THP mode) is used to reduce a probability of the touch control failure. A possible manner in which the TPIC determines whether the current running application is the first preset application is as follows: The system status information includes the information d, the information d indicates the current running application, the TPIC may determine the current running application based on the information d, and then the TPIC determines, based on the current running application and a preset application list, whether the current running application is the first preset application. For example, if an application identifier of the current running application exists in the preset application list, the TPIC determines that the current running application is the first preset application; otherwise, the TPIC determines that the current running application is not the first preset application. Optionally, the preset application list may be preconfigured.
Manner 5: When the TPIC determines, based on the system status information, that the current running load is less than or equal to a preset load amount, the TPIC uses the first mode; otherwise, the TPIC uses the second mode. For example, the system status information includes the information e, the information e indicates the current running load, and the TPIC determines the current running load based on the information e, and compares the current running load with the preset load amount. As described above, in the first mode, a computing power is borne by the SOC. In consideration of a case in which load of the SOC is large, if the first mode is used, the load of the SOC is increased, and consequently running freezing of a device is caused. Therefore, when the load of the SOC is large, the second mode may be used, that is, the TPIC bears the computing power. When the load of the SOC is small, the first mode is used, that is, the SOC bears the computing power.

Optionally, there may be a specific priority sequence between the foregoing Manner 1 to Manner 5. For example, the priority sequence is: Manner 2/Manner 3>Manner 1>Manner 5>Manner 4. Manner 2 and Manner 3 may have a same priority. A manner with a high priority is preferentially used to determine whether to use the first mode or the second mode. If a specific mode cannot be determined, a manner with a low priority is used for determining. For example, the TPIC first determines the mode in Manner 2 and Manner 3; and assuming that the first mode (where the first driver is normal) is determined in Manner 2, and the second mode (where the second driver is normal) is determined in Manner 3, that is, a specific mode cannot be determined, the TPIC may further determine the mode in Manner 1, Manner 5, Manner 4, and the like based on the foregoing priority relationship.

S503: The TPIC sends first information to the SOC through the first driver in the first mode, where the first information includes first capacitance data, so that the SOC obtains first position coordinates through calculation based on the first capacitance data. As described above, the first driver is the THP driver, the first driver supports a THP protocol, and the THP protocol specifies that information content transmitted by the TPIC to the SOC may be capacitance data, so that if the TPIC uses the first mode, the collected first capacitance data can be sent to the SOC through the THP driver.

Optionally, that the TPIC sends the first information to the SOC through the first driver may include: The TPIC writes the first information into a first buffer, where the first information complies with the THP protocol; and the SOC runs the first driver (namely, the THP driver), and reads the first information from the first buffer. For example, the first driver includes address information of the first buffer, so that the SOC runs the first driver, and can read the first information from the first buffer based on the address information.

In some embodiments, the first information includes one or more fields, and a first field in the one or more fields includes the first capacitance data. The first field may be a field that is specified in the THP protocol and that is used to place the capacitance data.

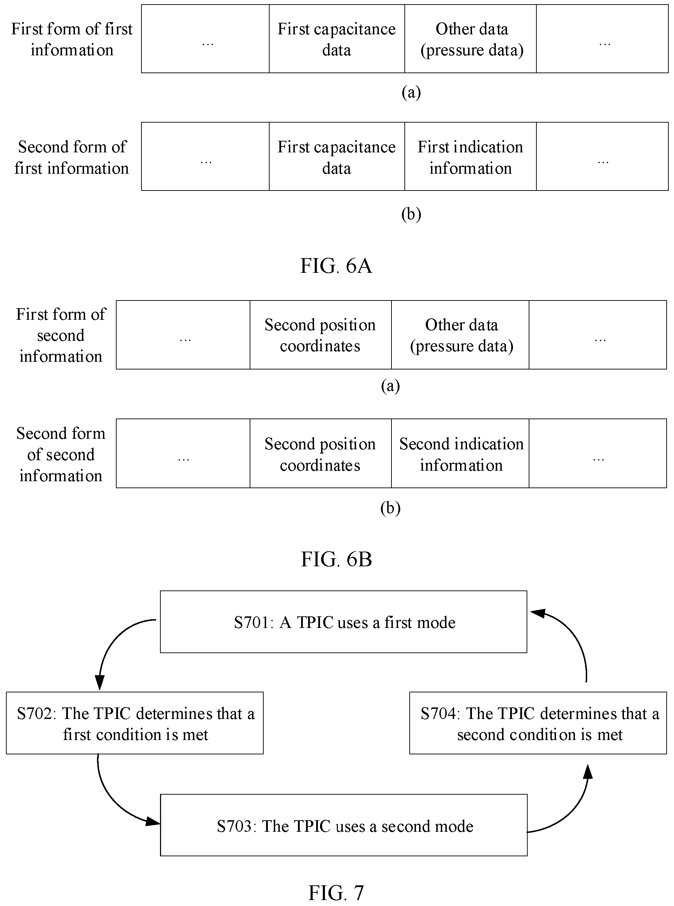

In some other embodiments, the first information may further include other data, for example, pressure data. This is because when a user performs an operation on a touch display screen, the TPIC may not only collect the first capacitance data, but also collect the other data, for example, the pressure data. A possible manner is as follows: The touch display screen includes a pressure sensor, and the pressure sensor can sense pressure of the user on the touch display screen, and send the pressure data to the TPIC. In some scenarios (for example, a drawing scenario), the SOC needs to make different responses when pressure of the user on the touch display screen is different. For example, when the pressure is high, a drawn line is thick; or when the pressure is low, a drawn line is thin. Therefore, the TPIC needs to transmit the pressure data to the SOC to make a response. Therefore, the first information further includes the pressure data. In an example, (a) in FIG. 6A is a diagram of the first information. As shown in(a) in FIG. 6A, the first information includes the first capacitance data and the other data, for example, the pressure data. It should be noted that the pressure data is mainly used as an example herein, and other data is also applicable. This is not limited in this embodiment of this application.

Optionally, the other data may not need to be carried in the first information, but is sent to the SOC in another manner. In an example scenario, a stylus includes a pressure sensor, Bluetooth, and the like. When the user performs an operation on the touch display screen through the stylus, the pressure sensor in the stylus may sense the pressure data, and send the pressure data to the SOC through Bluetooth. Therefore, the pressure data is transmitted by the stylus to the SOC through Bluetooth, and the TPIC does not need to transmit the pressure data to the SOC. Optionally, in this case, to prompt the SOC to receive the pressure data through Bluetooth, a possible manner is as follows: The first information includes first indication information, and the first indication information indicates the SOC to receive the pressure data through Bluetooth. In an example, (b) in FIG. 6A is another diagram of the first information. As shown in (b) in FIG. 6A, the first information includes the first capacitance data and first indication information, and the first indication information indicates the SOC to receive the pressure data through Bluetooth. It should be noted that the pressure data is mainly used as an example herein, and other data, for example, angle data or acceleration data, is also applicable. For example, a stylus includes an angle sensor, configured to detect an angle between the stylus and the touch display screen. For another example, the stylus includes an acceleration sensor, configured to detect an acceleration of the stylus.

If a form of the first information in (a) in FIG. 6A is referred to as a first form, a form of the first information in (b) in FIG. 6A is referred to as a second form. The electronic device may use the first form or the second form based on an actual scenario. For example, when a finger of the user currently operates on the touch display screen, the first form is used; or when the stylus currently operates on the touch display screen, the second form is used.

Optionally, that the TPIC communicates with the SOC through the first driver in the first mode may include: The TPIC communicates with the SOC through a first interface, where the first interface corresponds to the first driver. The first interface may be various types of interfaces, for example, an inter-integrated circuit (inter-integrated circuit, I2C) interface, a serial peripheral interface (Serial Peripheral Interface, SPI), a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, and a universal serial bus (universal serial bus, USB) interface.

S504: The TPIC sends second information to the SOC through the second driver in the second mode, where the second information includes second position coordinates, and the second position coordinates are obtained through calculation based on second capacitance data generated by a touch panel. As described above, the second driver is the HID driver, the second driver supports an HID protocol, and the HID protocol specifies that information content transmitted by the TPIC to the SOC is position coordinates, so that if the TPIC uses the second mode, the collected second capacitance data needs to be calculated into the second position coordinates, and then the second position coordinates are sent to the SOC through the HID driver.

Optionally, that the TPIC sends the second information to the SOC through the second driver may include: The TPIC writes the second information into a second buffer, where the second information complies with the HID protocol; and the SOC runs the second driver (namely, the HID driver), and reads the second information from the second buffer. For example, the second driver includes address information of the second buffer, so that the SOC runs the second driver, and can read the second information from the second buffer based on the address information. Optionally, the second buffer and the foregoing first buffer are different buffers.

In some embodiments, the second information includes one or more fields, and a second field in the one or more fields includes the second position coordinates. The second field may be a field that is specified in the HID protocol and that is used to place the position coordinates.

In some other embodiments, the second information may further include other data, for example, pressure data. For a reason why the second information includes the pressure data, refer to the foregoing descriptions. Details are not described herein again. In an example, (a) in FIG. 6B is a diagram of the second information. The second information includes the second position coordinates, and further includes the other data, for example, the pressure data.

Optionally, the other data may not need to be carried in the second information, but is sent to the SOC in another manner. For example, in a scenario of a stylus, the pressure data may be sent by the stylus to the SOC through Bluetooth. For a specific principle, refer to the foregoing descriptions. Optionally, to prompt the SOC to receive the pressure data through Bluetooth, a possible manner is as follows: The second information includes second indication information, and the second indication information indicates the SOC to receive the pressure data through Bluetooth. In an example, (b) in FIG. 6B is another diagram of the second information. The second information includes the second position coordinates, and further includes the second indication information.

If a form of the second information in (a) in FIG. 6B is referred to as a first form, a form of the second information in (b) in FIG. 6B is referred to as a second form. The electronic device may use the first form or the second form based on an actual scenario. For example, when a finger of the user currently operates on the touch display screen, the first form is used; or when the stylus currently operates on the touch display screen, the second form is used.

Optionally, that the TPIC communicates with the SOC through the second driver in the second mode may include: The TPIC communicates with the SOC through a second interface, where the second interface corresponds to the second driver. The second interface may be various types of interfaces, for example, an I2C interface, an SPI interface, a PCM interface, a UART interface, an MIPI interface, a GPIO interface, and a USB interface. The second interface and the foregoing first interface may be interfaces of a same type or different types. For example, the first interface is a USB interface, and the second interface is an I2C interface.

According to the embodiment shown in FIG. 5, the TPIC may use the first mode or the second mode. Regardless of which mode is used, when a specific condition is met, the TPIC may switch to another mode. For example, FIG. 7 is a schematic flowchart of a touch control method according to an embodiment of this application. The method may be applied to a display system, and the display system includes, for example, a structure shown in FIG. 4A. The display system may be disposed in an electronic device, and the electronic device is, for example, a notebook computer or a tablet computer. As shown in FIG. 7, the procedure includes the following steps.

S701: A TPIC uses a first mode, where the first mode is a mode in which a first driver communicates with an SOC. For a specific process, refer to the foregoing descriptions.

S702: When determining that a first condition is met, the TPIC may switch from the first mode to a second mode.

In some embodiments, the TPIC may determine, based on system status information, whether the first condition is met. For the system status information and a manner in which the TPIC obtains the system status information, refer to the foregoing descriptions. Details are not described again.

Optionally, the first condition may include at least one of the following:
(1) The first driver is abnormal. Optionally, that the first driver is abnormal may include: The first driver is deleted, uninstalled, disabled, intruded by a virus, or the like.
(2) A current system enters a second system. The second system is a system other than the first system. For example, the first system is a main operating system, for example, a Window system, and the second system is a pre-operating system, for example, a Pre system; or the first system is a host system, and the second system is a guest system.
(3) A current running application of the SOC is a second preset application. The second preset application is an application other than a first preset application. For the first preset application, refer to the foregoing descriptions.
(4) Current running load of the SOC is greater than a first preset load amount. As described above, in the first mode, a computing power is borne by the SOC; and in the second mode, the computing power is borne by the TPIC. Therefore, when the load of the SOC is large, the second mode may be used to reduce the load of the SOC. When the load of the SOC is small, the first mode may be used to reduce the load of the TPIC.
(5) A user operation is received. The user operation is used to switch from the first mode to the second mode. In an example, before receiving the user operation, the electronic device may output prompt information, and the prompt information is used to prompt whether to enter the second mode. The electronic device enters the second mode after receiving a confirmation operation.
(6) Current running load of the TPIC is less than a second preset load amount. As described above, in the first mode, a computing power is borne by the SOC; and in the second mode, the computing power is borne by the TPIC. Therefore, when the load of the TPIC is large, the first mode may be used to reduce the load of the TPIC. When the load of the TPIC is small, the second mode may be used to reduce the load of the SOC.

S703: The TPIC uses the second mode.

In some embodiments, after switching to the second mode, the electronic device may further output the prompt information, to prompt that the electronic device has entered the second mode.

S704: When determining that a second condition is met, the TPIC may switch from the second mode to the first mode.

In some embodiments, the TPIC may determine, based on the system status information, whether the second condition is met. For the system status information and a manner in which the TPIC obtains the system status information, refer to the foregoing descriptions. Details are not described again.

Optionally, the second condition may include at least one of the following:
(1) The first driver is restored to normal.
(2) The current system enters the first system.
(3) The current running application of the SOC is a first preset application.
(4) The current running load of the SOC is less than or equal to the first preset load amount.
(5) The user operation is received. The user operation is used to switch from the second mode to the first mode. In an example, before receiving the user operation, the electronic device may output prompt information, and the prompt information is used to prompt whether to enter the first mode. The electronic device enters the first mode after receiving a confirmation operation.
(6) The current running load of the TPIC is greater than or equal to the second preset load amount.
(7) The second driver program is abnormal.

In some embodiments, after switching to the first mode, the electronic device may further output the prompt information, to prompt that the electronic device has entered the first mode.

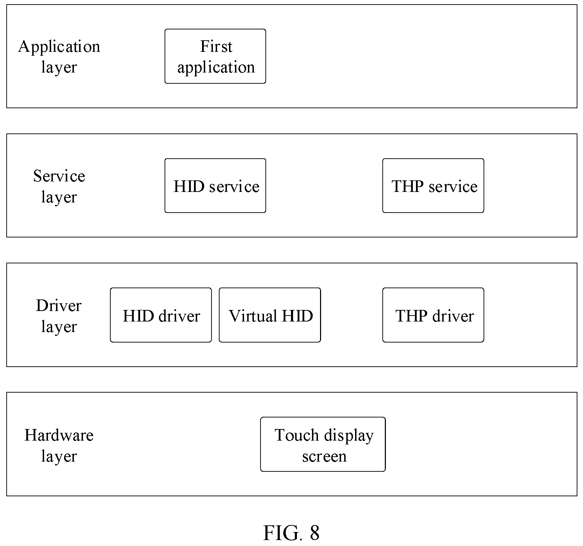

FIG. 8 is a diagram of an electronic device according to an embodiment of this application. The figure may be understood as a diagram of a software system of the electronic device. As shown in FIG. 8, the software system of the electronic device may use a layered architecture. In the layered architecture, software is divided into several layers, and each layer has a clear role and responsibility. The layers communicate with each other through a software interface. Certainly, in addition to the layered architecture, an event-driven architecture, a microkernel architecture, a microservice architecture, a cloud architecture, or the like may be further used. This is not limited in embodiments of this application. In embodiments of this application, the layered architecture is mainly used as an example for description. As shown in FIG. 8, the software system of the electronic device may include four layers: an application layer, a service layer, a driver layer, and a hardware layer from top to bottom. It should be noted that in FIG. 8, an example in which the software system includes four layers is used. In an actual product, more or fewer layers may be included than those in FIG. 8, and a name of each layer, a position relationship between layers, and the like are not limited in embodiments of this application.

As shown in FIG. 8, the application layer includes various types of applications, for example, a first application. The first application may be, for example, an application having a writing scenario, for example, a note-taking application (for example, a memo), a drawing application, or a conference application. Certainly, the first application may alternatively be another application. This is not limited in embodiments of this application.

As shown in FIG. 8, the service layer includes an HID service and a THP service. The HID service is used to be connected to the first application at the application layer and an HID driver at the driver layer. For example, the HID service may send, to the first application to make a response, position coordinates provided by the HID driver. The THP service is used to be connected to a THP driver at the driver layer and calculate the position coordinates based on capacitance data reported by the THP driver. It should be noted that the THP service needs to provide the position coordinates obtained through calculation for the first application to make a response. There may be a plurality of communication manners between the THP service and the first application. Manner A: The THP service is directly connected to the first application, and directly sends the calculated position coordinates to the first application. Manner B: The THP service is connected to the first application by using the HID service. For example, the THP service sends the calculated position coordinates to the HID service, and the HID service sends the position coordinates to the first application. In a possible scenario of Manner B, the HID service is configured by default after the electronic device is delivered from a factory, and the first application acknowledges only the position coordinates transferred by the HID service (where "acknowledge" may be understood as respond to the position coordinates). If the THP service directly sends the position coordinates to the first application, the position coordinates may be deleted by the first application as unknown information. Therefore, the THP service needs to send the position coordinates to the HID service, and the HID service forwards the position coordinates to the first application. As described above, in Manner B, the THP service needs to send the calculated position coordinates to the HID service. Optionally, that the THP service sends the position coordinates to the HID service may include: The THP service is directly connected to the HID service, and directly sends the position coordinates to the HID service. Alternatively, in a possible case, the HID service acknowledges the position coordinates sent by the HID driver at the driver layer, and the position coordinates directly sent by the THP service to the HID service may also be deleted as unknown information. Therefore, the electronic device may create a virtual HID. Because the virtual HID is a simulation of the HID driver, the HID service acknowledges the position coordinates sent by the virtual HID. Therefore, the THP service may send the position coordinates to the virtual HID, and the virtual HID sends the position coordinates to the HID service, to send the position coordinates to the first application by using the HID service.

As shown in FIG. 8, the driver layer includes the HID driver, the virtual HID driver, and the THP driver. For the HID driver and THP driver, refer to the foregoing descriptions. Details are not described herein again. The virtual HID driver may be understood as a virtual unit of the HID driver, and may be connected to the THP service and the HID driver. For example, the virtual HID driver is configured to provide, for the HID service, the position coordinates sent by the THP service, so that the HID service sends the position coordinates to the first application to make a response.

As shown in FIG. 8, the hardware layer includes a touch display screen. The touch display screen includes a touch panel and a TPIC. Refer to the foregoing descriptions. Details are not described herein again.

The following continues to use FIG. 8 as an example to describe a dual-driver touch control method provided in embodiments of this application.

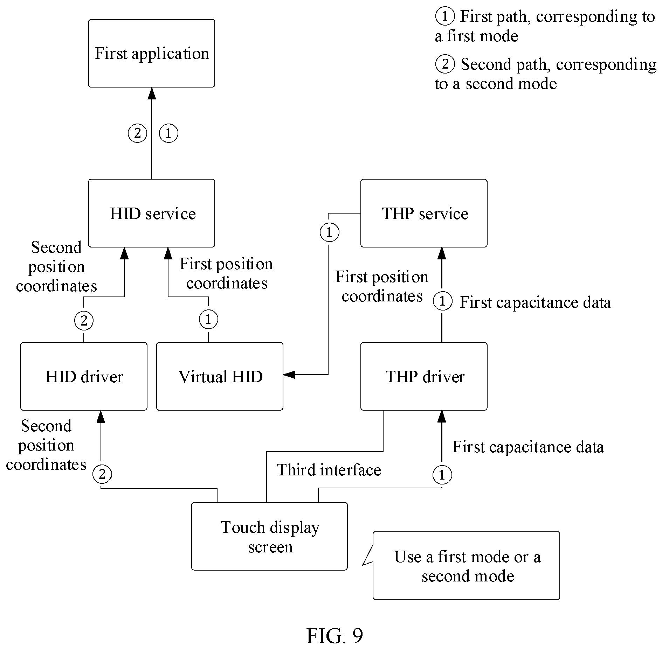

In an example, FIG. 9 is a schematic flowchart of a touch control method according to an embodiment of this application. The figure may be understood as a diagram of information exchange between modules in the software system shown in FIG. 8. As shown in FIG. 9, the procedure may include the following steps.
(1) The TPIC on the touch display screen determines whether to use a first mode (for example, a THP mode) or a second mode (for example, a TPP mode). For example, the TPIC may obtain system status information, and determine, based on the system status information, whether to use the first mode or the second mode. For the system status information and a process of determining, based on the system status information, which mode is to be used, refer to the foregoing descriptions. Details are not described herein again. A possible implementation is as follows: As shown in FIG. 9, the TPIC (not shown in FIG. 9) may be connected to the THP driver through a third interface, to obtain the system status information from the THP driver through the third interface. For example, the third interface may be a GPIO interface. In an example, the THP driver may obtain the system status information from the THP service. Optionally, the THP service may autonomously collect the system status information, or may obtain the system status information from an application and/or a function, in the electronic device, used to collect the system status information. For example, the application and/or the function may be referred to as a maintenance and test application, which is not shown in FIG. 9.

If the TPIC determines to use the first mode, a first path in FIG. 9 may be used, and the first path is represented by ①. If the TPIC determines to use the second mode, a second path in FIG. 9 may be used, and the second path is represented by ②.
(2) In the first mode, a process of transferring information through the first path may include: (2.1) The TPIC sends first information to the THP driver, where the first information includes first capacitance data. (2.2) The THP driver sends the first capacitance data to the THP service. (2.3) The THP service obtains first position coordinates through calculation based on the first capacitance data, and sends the first position coordinates to the virtual HID driver. (2.4) The virtual HID driver sends the first position coordinates to the HID service. (2.5) The HID service sends the first position coordinates to the first application, so that the first application responds to the first position coordinates.
(3) In the second mode, a process of transferring information through the second path may include: (3.1) The TPIC sends second information to the HID driver, where the second information includes second position coordinates, and the second position coordinates are obtained by the TPIC through calculation based on the second capacitance data. (3.2) The HID driver sends the second position coordinates to the HID service. (3.3) The HID service sends the second position coordinates to the first application, so that the first application responds to the second position coordinates.

As described above, when the user performs an operation on the touch display screen of the electronic device through a stylus, the stylus may sense at least one of pressure data, angle data, acceleration data, and the like, and the stylus may send the at least one of the pressure data, the angle data, and the acceleration data to an SOC of the electronic device through Bluetooth.

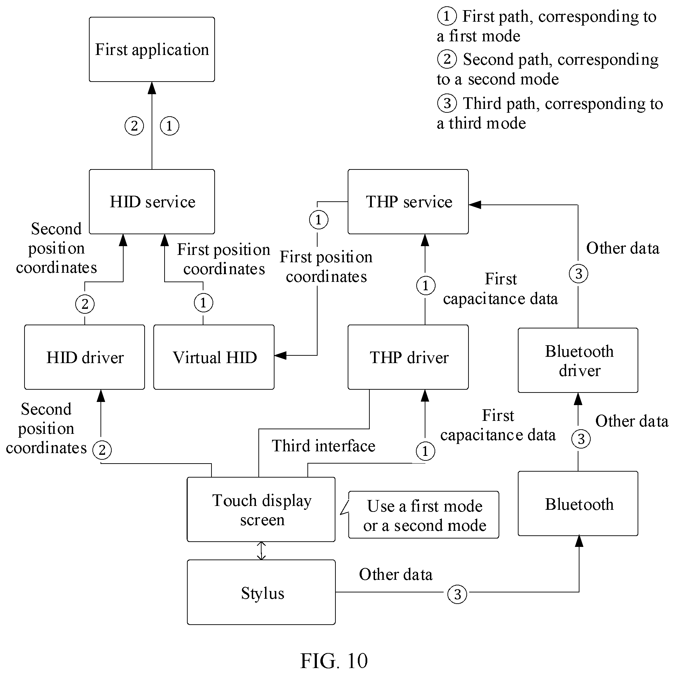

For example, FIG. 10 is another schematic flowchart of a touch control method according to an embodiment of this application. A difference between FIG. 10 and FIG. 9 is that FIG. 10 is applicable to a stylus interaction scenario, that is, a stylus sends at least one of other data, for example, pressure data, angle data, and acceleration data, to a THP service through Bluetooth. A possible manner is as follows: If a TPIC determines to use a first mode, a first path and a third path in FIG. 10 may be used. The first path is represented by ①, and the third path is represented by ③; and the third path is used to transmit data such as the pressure data, the angle data, and the acceleration data through Bluetooth. If the TPIC determines to use a second mode, a second path in FIG. 10 may be used, and the second path is represented by ②.

The following describes the electronic device provided in embodiments of this application. The electronic device may be various devices listed above, for example, a notebook computer or a tablet computer.

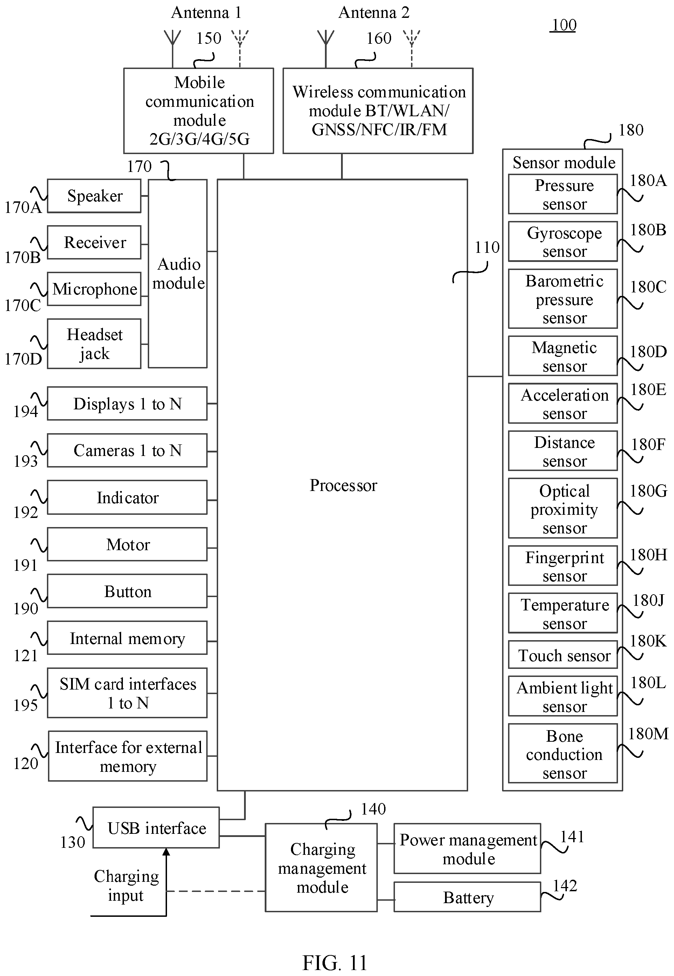

For example, FIG. 11 is a diagram of a structure of an electronic device according to an embodiment of this application. As shown in FIG. 11, the electronic device may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device. The controller may generate an operation control signal based on an instruction operation code and a time sequence signal, to complete control of instruction reading and instruction execution. A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to be connected to a charger to charge the electronic device 100, or may be configured to transmit data between the electronic device 100 and a peripheral device, or may be configured to be connected to a headset for playing audio through the headset. The interface may be further configured to be connected to another electronic device such as an AR device.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

A wireless communication function of the electronic device may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna of the electronic device may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a solution to wireless communication such as 2G/3G/4G/5G applicable to the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a solution to wireless communication applicable to the electronic device, for example, a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device, the antenna 1 and the mobile communication module 150 are coupled, and the antenna 2 and the wireless communication module 160 are coupled, so that the electronic device can communicate with a network and another device by using a wireless communication technology.

The display 194 is configured to display a display interface of an application, and the like. The display 194 includes a display panel. In some embodiments, the electronic device may include one or N displays 194, where N is a positive integer greater than 1.

In this embodiment of this application, the display 194 may be a touch display screen. The touch display screen includes a touch panel and a TPIC. For the touch panel and the TPIC, refer to the foregoing descriptions. The TPIC may support two modes: a first mode and a second mode. In the first mode, the TPIC communicates with the processor 110 based on a first driver (for example, a THP driver). In the second mode, the TPIC communicates with the processor 110 based on a second driver (for example, an HID driver). The first mode is used as an example. After collecting first capacitance data, the TPIC sends first information to the processor 110, where the first information is based on a first driver protocol (for example, a THP protocol), and the first information includes the first capacitance data. The processor 110 determines first position coordinates based on the first capacitance data, and responds (for example, updates an interface) based on the first position coordinates. In the first mode, the TPIC does not need to bear a process of calculating capacitance data to position coordinates, and a computing power is reduced. When the electronic device meets a first condition (for example, the first driver is abnormal), the electronic device switches from the first mode to the second mode. After switching to the second mode, the TPIC collects second capacitance data, and obtains second position coordinates based on the second capacitance data. The TPIC sends second information to the processor 110, where the second information is based on a second driver protocol (for example, an HID protocol), and the second information includes the second position coordinates. The processor 110 responds (for example, updates an interface) based on the second position coordinates. In the second mode, the TPIC bears a process of calculating capacitance data to position coordinates, and the processor 110 does not need to calculate the position coordinates. Therefore, the processor 110 can quickly respond.

The electronic device 100 may implement a photographing function through the camera 193, the ISP, the video codec, the GPU, the display 194, the application processor, and the like. The ISP is configured to process data fed back by the camera 193.

The internal memory 121 may be configured to store computer-executable program code. The executable program code includes instructions. The processor 110 runs the instructions stored in the internal memory 121, to perform various function applications and data processing of the electronic device. The internal memory 121 may include a program storage area and a data storage area. The program storage area may store an operating system, software code of at least one application, and the like. The data storage area may store data (for example, an image or a video) generated in a process of using the electronic device, and the like. In addition, the internal memory 121 may include a high-speed random access memory, or may include a non-volatile memory, for example, at least one magnetic disk storage device, a flash storage device, or a universal flash storage.

The interface 120 for external memory may be configured to be connected to an external memory card, for example, a micro SD card, to extend a storage capability of the electronic device. The external memory card communicates with the processor 110 through the interface 120 for external memory, to implement a data storage function. For example, files such as pictures or videos are stored in the external memory card.

The electronic device may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may listen to music by using one or more speakers 170A, or may be used in a speaker scenario, for example, answering a handsfree call.

The receiver 170B, also referred to as an "earpiece", is configured to convert an audio electrical signal into a sound signal, and there may be one or more receivers 170B. When a call is answered or voice information is received through the electronic device 100, the receiver 170B may be put close to a human ear to listen to a voice.

The microphone 170C, also referred to as a "mike" or a "mic", is configured to convert a sound signal into an electrical signal.

The headset jack 170D is configured to be connected to a wired headset.

The pressure sensor 180A is configured to sense a pressure signal, and can convert the pressure signal into an electrical signal. In some embodiments, the pressure sensor 180A may be disposed on the display 194.

The gyroscope sensor 180B may be configured to determine a motion gesture of the electronic device. In some embodiments, angular velocities of the electronic device around three axes (namely, axes x, y, and z) may be determined through the gyroscope sensor 180B. The gyroscope sensor 180B may be configured to implement image stabilization during photographing.

The barometric pressure sensor 180C is configured to measure barometric pressure. In some embodiments, the electronic device calculates an altitude based on a barometric pressure value measured by the barometric pressure sensor 180C, to assist in positioning and navigation.

The magnetic sensor 180D includes a Hall sensor. The electronic device may detect opening and closing of a flip cover through the magnetic sensor 180D.

The acceleration sensor 180E may detect accelerations in various directions (usually on the three axes) of the electronic device. When the electronic device is static, a magnitude and a direction of gravity may be detected.

The distance sensor 180F is configured to measure a distance. The electronic device may measure a distance through infrared or laser.

The optical proximity sensor 180G may include, for example, a light-emitting diode (LED) and an optical detector, for example, a photodiode. The light-emitting diode may be an infrared light-emitting diode. The electronic device emits infrared light outwards through the light-emitting diode. The electronic device uses the photodiode to detect infrared reflected light from a nearby object. When detecting sufficient reflected light, the electronic device may determine that there is an object near the electronic device. When detecting insufficient reflected light, the electronic device may determine that there is no object near the electronic device.

The ambient light sensor 180L is configured to sense ambient light brightness. The electronic device may adaptively adjust brightness of the display 194 based on the sensed ambient light brightness.

The fingerprint sensor 180H is configured to collect a fingerprint.

The temperature sensor 180J is configured to detect a temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event.

The bone conduction sensor 180M may obtain a vibration signal. In some embodiments, the bone conduction sensor 180M may obtain a vibration signal of a vibration bone of a human vocal-cord part.

The button 190 includes a power button, a volume button, and the like. The button 190 may be a mechanical button, or may be a touch button. The electronic device may receive a button input, and generate a button signal input related to user settings and function control of the electronic device. The motor 191 may generate a vibration prompt. The motor 191 may be configured to provide an incoming call vibration prompt and a touch vibration feedback. The indicator 192 may be an indicator light, and may be configured to indicate a charging status and a power change, or may be configured to indicate a message, a missed call, a notification, and the like. The SIM card interface 195 is configured to be connected to a SIM card. The SIM card may be inserted into the SIM card interface 195 or pulled out of the SIM card interface 195, to implement contact with or separation from the electronic device.

It may be understood that components shown in FIG. 11 do not constitute a specific limitation on the electronic device. The electronic device in embodiments of the present invention may include more or fewer components than those in FIG. 11. In addition, a combination/connection relationship between the components in FIG. 11 may alternatively be adjusted and modified.

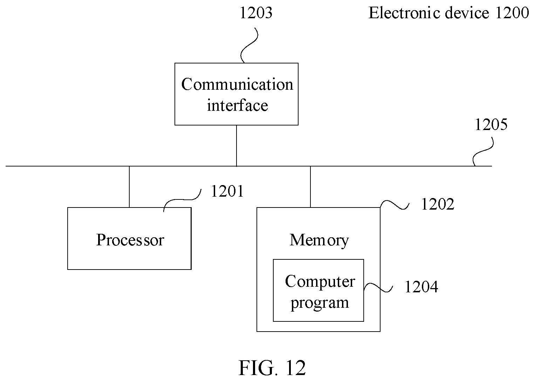

FIG. 12 is a diagram of another structure of an electronic device according to an embodiment of this application. The electronic device 1200 may be various devices listed above, for example, a notebook computer. As shown in FIG. 12, the electronic device 1200 may include one or more processors 1201, one or more memories 1202, a communication interface 1203, and one or more computer programs 1204. The foregoing components may be connected through one or more communication buses 1205. The one or more computer programs 1204 are stored in the memory 1202 and are configured to be executed by the one or more processors 1201, and the one or more computer programs 1204 include instructions. For example, when the electronic device 1200 is the foregoing electronic device, the instructions may be used to perform related steps of the electronic device in any one of the foregoing embodiments corresponding to FIG. 1 to FIG. 10. The communication interface 1203 is configured to implement communication between the electronic device 1200 and another device. For example, the communication interface may be a transceiver.

In the foregoing embodiments provided in this application, the method provided in embodiments of this application is described from a perspective in which the electronic device (for example, the notebook computer) is used as an execution body. To implement the functions in the method provided in embodiments of this application, the terminal device may include a hardware structure and/or a software module, and implement the foregoing functions in a form of a hardware structure, a software module, or a combination of the hardware structure and the software module. Whether a function in the foregoing functions is performed by using the hardware structure, the software module, or the combination of the hardware structure and the software module depends on particular applications and design constraints of the technical solutions.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like. When no conflict occurs, the solutions in the foregoing embodiments may be combined for use.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the scope of this application. This application is intended to cover these modifications and variations of this application provided that they fall within the scope of protection defined by the following claims and their equivalent technologies.

## Claims

1. A touch control method, applied to a display system, wherein the display system comprises a system on chip and a touch display screen, and the method comprises:
collecting, by the touch display screen, first capacitance data;
receiving, by the system on chip, first information sent by the touch display screen, wherein the first information comprises the first capacitance data;
determining, by the system on chip, first position coordinates based on the first capacitance data, and responding based on the first position coordinates;
collecting, by the touch display screen, second capacitance data;
obtaining, by the touch display screen, second position coordinates based on the second capacitance data when determining that the display system meets a first condition;
receiving, by the system on chip, second information sent by the touch display screen, wherein the second information comprises the second position coordinates; and
responding, by the system on chip, based on the second position coordinates.

2. The method according to claim 1, wherein the system on chip comprises a first driver program and a second driver program, both the first driver program and the second driver program are driver programs of the touch display screen, the first driver program supports the first driver protocol, and the second driver program supports the second driver protocol;
receiving, by the system on chip, the first information sent by the touch display screen comprises: when the system on chip runs the first driver program, receiving the first information sent by the touch display screen, wherein the first information is based on the first driver protocol; and
receiving, by the system on chip, the second information sent by the touch display screen comprises: when the system on chip runs the second driver program, receiving the second information sent by the touch display screen, wherein the second information is based on the second driver protocol.

3. The method according to claim 2, wherein the first driver program is a touch host process THP driver, and the second driver program is a hardware interface device HID driver.

4. The method according to claim 2 or 3, wherein that the display system meets the first condition comprises at least one of the following:
the first driver program is abnormal;
a current running system of the system on chip is a second system;
a current running application of the system on chip is a second preset application;
current running load of the system on chip is greater than or equal to a first preset load amount;
current running load of the touch display screen is less than or equal to a second preset load amount; and
the system on chip receives a second operation, wherein the second operation indicates to switch from the first driver program to the second driver program.

5. The method according to any one of claims 2 to 4, wherein the method further comprises:
collecting, by the touch display screen, third capacitance data;
sending, by the touch display screen, third information to the system on chip when determining that the display system meets a second condition, wherein the third information comprises the third capacitance data; and
determining, by the system on chip, third position coordinates based on the third capacitance data, and responding based on the third position coordinates.

6. The method according to claim 5, wherein that the display system comprises the second condition comprises at least one of the following:
the first driver program is restored to normal;
the second driver program is abnormal;
a current running system of the system on chip is a first system;
a current running application of the system on chip is a first preset application;
current running load of the system on chip is less than the first preset load amount;
current running load of the touch display screen is greater than the second preset load amount; and
the system on chip receives a first operation, wherein the first operation indicates to switch from the second driver program to the first driver program.

7. The method according to any one of claims 1 to 6, wherein receiving, by the system on chip, the first information sent by the touch display screen comprises: receiving, by the system on chip, the first information through a first interface, wherein the first interface is an SPI interface or a USB interface.

8. The method according to any one of claims 1 to 7, wherein receiving, by the system on chip, the second information sent by the touch display screen comprises: receiving, by the system on chip, the second information through a second interface, wherein the second interface is an I2C interface, an SPI interface, or a USB interface.

9. The method according to any one of claims 1 to 8, wherein the first information and/or the second information further comprise/comprises first indication information, the first indication information indicates the system on chip to receive other data through a short-range communication module, the other data comprises at least one of pressure data, angle data, and acceleration data, and the method further comprises:
receiving, by the system on chip, the other data through the short-range communication module, and responding based on the other data.

10. The method according to any one of claims 2 to 9, wherein the method further comprises:
controlling, by the system on chip, the first driver program to be in a disabled state.

11. The method according to any one of claims 2 to 10, wherein the method further comprises:
outputting, by the touch display screen, first prompt information, wherein the first prompt information is used to prompt that the display system has entered a second mode, and the second mode is a mode in which a touch control function is implemented based on the second driver program.

12. The method according to any one of claims 2 to 11, wherein before obtaining the second position coordinates based on the second capacitance data, the method further comprises:
outputting, by the touch display screen, second prompt information, wherein the second prompt information is used to prompt whether to enter the second mode, and the second mode is the mode in which the touch control function is implemented based on the second driver program; and
receiving, by the touch display screen, a confirmation operation, wherein the confirmation operation indicates to confirm entry into the second mode.

13. The method according to any one of claims 5 to 12, wherein the method further comprises:
outputting, by the touch display screen, third prompt information, wherein the third prompt information is used to prompt that the display system has entered a first mode, and the first mode is a mode in which the touch control function is implemented based on the first driver program.

14. The method according to any one of claims 5 to 13, wherein before sending the third information to the system on chip, the method further comprises:
outputting, by the touch display screen, fourth prompt information, wherein the fourth prompt information is used to prompt whether to enter the first mode, and the first mode is the mode in which the touch control function is implemented based on the first driver program; and
receiving, by the touch display screen, a confirmation operation, wherein the confirmation operation indicates to confirm entry into the first mode.

15. The method according to any one of claims 1 to 14, wherein determining, by the touch display screen, that the display system meets the first condition comprises:
obtaining, by the touch display screen, system status information from the system on chip through a third interface, wherein the system status information indicates at least one of the current running system, the current running application, the current running load, whether the first driver program is normal, and whether the second driver program is normal of the system on chip; and
determining, by the touch display screen based on the system status information, that the display system meets the first condition.

16. A touch control method, applied to a system on chip, wherein the system on chip is connected to a touch display screen, and the method comprises:
receiving, by the system on chip, first information sent by the touch display screen, wherein the first information comprises first capacitance data;
determining, by the system on chip, first position coordinates based on the first capacitance data, and responding based on the first position coordinates;
when the system on chip meets a first condition and/or the touch display screen meets a second condition, receiving, by the system on chip, second information sent by the touch display screen, wherein the second information comprises second position coordinates, and the second position coordinates are obtained by the touch display screen based on second capacitance data; and
responding, by the system on chip, based on the second position coordinates.

17. The method according to claim 16, wherein the system on chip comprises a first driver program and a second driver program, both the first driver program and the second driver program are driver programs of the touch display screen, the first driver program supports the first driver protocol, and the second driver program supports the second driver protocol;
receiving, by the system on chip, the first information sent by the touch display screen comprises: when the system on chip runs the first driver program, receiving the first information sent by the touch display screen, wherein the first information is based on the first driver protocol; and
receiving, by the system on chip, the second information sent by the touch display screen comprises: when the system on chip runs the second driver program, receiving the second information sent by the touch display screen, wherein the second information is based on the second driver program.

18. The method according to claim 17, wherein the first driver program is a touch host process THP driver, and the second driver program is a hardware interface device HID driver.

19. The method according to claim 17 or 18, wherein that the system on chip meets the first condition comprises at least one of the following:
the first driver program is abnormal;
a current running system of the system on chip is a second system;
a current running application of the system on chip is a second preset application;
current running load of the system on chip is greater than or equal to a first preset load amount; and
the system on chip receives a second operation, wherein the second operation indicates to switch from the first driver program to the second driver program.

20. The method according to any one of claims 16 to 19, wherein that the touch display screen meets the second condition comprises:
current running load of the touch display screen is less than or equal to a second preset load amount.

21. A touch control method, applied to a touch display screen, wherein the touch display screen is connected to a system on chip, and the method comprises:
collecting, by the touch display screen, first capacitance data;
sending, by the touch display screen, first information to the system on chip, wherein the first information comprises the first capacitance data;
collecting, by the touch display screen, second capacitance data;
obtaining, by the touch display screen, second position coordinates based on the second capacitance data when determining that the system on chip meets a first condition and/or the touch display screen meets a second condition; and
sending, by the touch display screen, second information to the system on chip, wherein the second information comprises the second position coordinates.

22. The method according to claim 21, wherein
sending, by the touch display screen, the first information to the system on chip comprises: writing, by the touch display screen, the first information into a first buffer, wherein the first information is based on a first driver protocol, the first buffer is configured to read the first information in the first buffer when the system on chip runs a first driver program, and the first driver program supports the first driver protocol; and
sending, by the touch display screen, the second information to the system on chip comprises: writing, by the touch display screen, the second information into a second buffer, wherein the second information is based on a second driver protocol, the second buffer is configured to read the second information in the second buffer when the system on chip runs a second driver program, and the second driver program supports the second driver protocol.

23. The method according to claim 22, wherein the first driver program is a touch host process THP driver, and the second driver program is a hardware interface device HID driver.

24. The method according to claim 22 or 23, wherein that the system on chip meets the first condition comprises at least one of the following:
the first driver program is abnormal;
a current running system of the system on chip is a second system;
a current running application of the system on chip is a second preset application;
current running load of the system on chip is greater than or equal to a first preset load amount; and
the system on chip receives a second operation, wherein the second operation indicates to switch from the first driver program to the second driver program.

25. The method according to any one of claims 21 to 24, wherein that the touch display screen meets the second condition comprises:
current running load of the touch display screen is less than or equal to a second preset load amount.

26. A system on chip, comprising a processing circuit and a storage medium, wherein the storage medium stores instructions; and when the instructions are executed by the processing circuit, the steps of the system on chip in the method according to any one of claims 1 to 15 are implemented, or the method according to any one of claims 16 to 20 is implemented.

27. A touch display screen, comprising a touch panel and a touch panel integrated circuit TPIC, wherein
the touch panel is configured to display an interface; and
the TPIC is configured to perform the steps of the touch display screen in the method according to any one of claims 1 to 15, or is configured to perform the method according to any one of claims 21 to 25.

28. An electronic device, comprising: the system on chip according to claim 26, and/or the touch display screen according to claim 27.

29. A computer-readable storage medium, wherein the computer-readable storage medium stores a computer program; and when the computer program is executed by a processor, the method according to any one of claims 1 to 25 is implemented.

30. A computer program product, wherein the computer program product comprises a computer program; and when the computer program is run on a computer, the computer is enabled to perform the method according to any one of claims 1 to 25.
